# EUROPÄISCHE PATENTSCHRIFT

(11) **EP 3 081 351 B1**
(45) Veröffentlichungstag und Bekanntmachung des Hinweises auf die Patenterteilung: **15.03.2023**
(21) Anmeldenummer: 16163812.7
(22) Anmeldetag: 05.04.2016
(51) Int. Cl.: B25J 13/02, B25J 13/06, B25J 9/16

(54) **ROBOTER-BEDIENHANDGERÄT, SOWIE ZUGEHÖRIGES VERFAHREN**
HAND-HELD ROBOT CONTROL APPARATUS, AND ASSOCIATED METHOD
APPAREIL DE COMMANDE ROBOTISE ET PROCEDE CORRESPONDANT

(30) Priorität: 13.04.2015 DE 102015206578
(43) Veröffentlichungstag der Anmeldung: 19.10.2016
(73) Patentinhaber: KUKA Deutschland GmbH, 86165 Augsburg (DE)
(72) Erfinder: RIEDEL, Martin, 86165 Augsburg (DE)
(74) Vertreter: Böss, Dieter Alexander

(56) Entgegenhaltungen:
- WO-A1-01/71878
- WO-A1-02/078913
- DE-A1-102010 025 781
- DE-A1-102011 118 310
- US-A1- 2013 161 967
- US-A1- 2015 051 736

## Beschreibung

Die Erfindung betrifft ein Roboter-Bedienhandgerät, aufweisend ein Gehäuse, das einen handgriffartigen Griffabschnitt aufweist, eine im Gehäuse angeordnete Sicherheits-Grundsteuervorrichtung und wenigstens einen mit dem Gehäuse verbundenen Halter, der zum manuell lösbaren mechanischen Ankoppeln des Gehäuses an ein vom Roboter-Bedienhandgerät verschiedenes, mit der Sicherheits-Grundsteuervorrichtung elektronisch kommunizierendes Gerät ausgebildet ist, und ein zughöriges Verfahren.

Die DE 10 2010 025 781 A1 beschreibt eine tragbare Sicherheitseingabeeinrichtung mit wenigstens einem Eingabemittel zum Eingeben eines Sicherheitssignals an eine Robotersteuerung, welche eine Schnittstelle aufweist zur Kommunikation mit einem mit der Sicherheitseingabeeinrichtung, insbesondere lösbar, verbundenen Handgerät zum Steuern eines Roboters mittels Kommunikation mit dieser Robotersteuerung. Der Oberbegriff des Anspruchs 1 stützt sich auf die DE 10 2010 025 781.

Die US 2015/051736 A1 beschreibt ein Roboter-Bedienhandgerät, das einen Halter für einen Tablet-Computer aufweist. Der dortige Halter weist eine erste Klammer und eine zweite Klammer auf, die über ein Gestänge längenverstellbar verbunden sind, um den Tablet-Computer an diagonal gegenüberliegenden Ecken des Tablet-Computers formschlüssig umgreifen zu können. Jede der beiden Klammern umgreift dabei jeweils zwei Randabschnitte des Tablet-Computers, so dass der Tablet-Computer durch die beiden Klammern an all seinen vier Randabschnitten belegt ist und demgemäß nicht freigelassen ist.

Die US 2013/0161967 A1 beschreibt eine Haltevorrichtung für ein mobiles elektronisches Gerät. Die Haltevorrichtung umfasst ein erstes nutförmiges Halteelement, ein zweites nutförmiges Halteelement und ein in der Ebene der Halteelemente liegendes Griffelement, welches als Verlängerung des ersten Halteelement ausgebildet ist.

Aufgabe der Erfindung ist es, ein Roboter-Bedienhandgerät und ein zughöriges Verfahren zu schaffen, durch welches eine besonders flexible und/oder intuitive Steuerung, insbesondere Programmierung von Robotern ermöglicht ist.

Die Aufgabe der Erfindung wird gelöst durch ein Roboter-Bedienhandgerät, aufweisend ein Gehäuse, das einen handgriffartigen Griffabschnitt aufweist, eine im Gehäuse angeordnete Sicherheits-Grundsteuervorrichtung und wenigstens einen mit dem Gehäuse verbundenen Halter, der zum manuell lösbaren mechanischen Ankoppeln des Gehäuses an ein vom Roboter-Bedienhandgerät verschiedenes, mit der Sicherheits-Grundsteuervorrichtung elektronisch kommunizierendes Gerät ausgebildet ist, wobei der Halter einen ersten Haltearm aufweist, der zum mechanischen Verbinden des Roboter-Bedienhandgeräts mit einem ersten Randabschnitt des Geräts unter Freilassen eines gegenüberliegenden Randabschnitts des Geräts ausgebildet ist und einen zweiten Haltearm aufweist, der zum mechanischen Verbinden des Roboter-Bedienhandgerät mit einem zweiten Randabschnitt des Geräts, der an den ersten Randabschnitt unter Bildung eines Eckabschnitts des Geräts anschließt, unter Freilassen eines dem zweiten Randabschnitt gegenüberliegenden Randabschnitt des Geräts, ausgebildet ist, wobei das Gehäuse einen ersten Gehäuseschenkel aufweist, an dem der erste Haltearm angeordnet ist, einen zweiten Gehäuseschenkel aufweist, an dem der zweite Haltearm angeordnet ist, wobei der erste Gehäuseschenkel und der zweite Gehäuseschenkel eine Ebene des Gehäuses aufspannen, die sich parallel zu einer Hauptebene des gehaltenen Gerätes erstreckt und von der sich der handgriffartige Griffabschnitt des Roboter-Bedienhandgeräts nach unten wegerstreckt.

Das Roboter-Bedienhandgerät kann insbesondere ein Roboterprogrammierhandgerät sein. Das Roboter-Bedienhandgerät kann auch ein Manipulator-Bedienhandgerät sein bzw. als ein solches bezeichnet werden. Das Roboter-Bedienhandgerät kann wenigstens ein Nothalt-Auslösemittel, wenigstens eine Zustimmungseinrichtung, wenigstens ein Betriebsartauswahlmittel, eine 3D/6D-Maus, einen Joystick und/oder ein Anzeigemittel, insbesondere ein Leuchtmittel und/oder ein elektronisches Display aufweisen.

Zumindest das wenigstens eine Nothalt-Auslösemittel, das wenigstens eine Zustimmungseinrichtung und/oder das wenigstens eine Betriebsartauswahlmittel können in sicherer Technik mit einer Robotersteuerung steuerungstechnisch verbunden sein, insbesondere mit dieser kommunizieren.

Die Sicherheits-Grundsteuervorrichtung des Roboter-Bedienhandgeräts ist also nicht nur dann zum Ansteuern eines Roboters ausgebildet und/oder eingerichtet, wenn das Roboter-Bedienhandgerät über den Halter mit dem jeweiligen Gerät mechanisch verbunden ist, sondern kann auch dann zum Ansteuern des Roboters ausgebildet und/oder eingerichtet sein, wenn das Roboter-Bedienhandgerät von dem Gerät mechanisch entfernt ist. Es können also auch mechanisch getrennt voneinander Grundsteuerfunktionen des Roboters über Eingabemittel des Roboter-Bedienhandgeräts angesteuert werden. Dies können insbesondere das bereits erwähnte Nothalt-Auslösemittel, die Zustimmungseinrichtung und/oder das Betriebsartauswahlmittel sein. Daneben können weitere ggf. nicht-sichere Eingabemittel und/oder Anzeigemittel an dem Roboter-Bedienhandgerät vorgesehen sein. Dies können beispielsweise ein oder mehrere Displays, Leuchtmittel, Schalter, Tasten, insbesondere zur Menüsteuerung und zur Auslösung eines Touch-Ups und/oder Start-/Stopp-Tasten sein.

Bei dem mit der Sicherheits-Grundsteuervorrichtung elektronisch kommunizierenden Gerät kann es sich um die Robotersteuerung, den Roboterarm selbst bzw. ein Robotergestell, eine fahrbare Roboterplattform und/oder insbesondere ein mobiles Endgerät handeln.

Im Falle eines mobilen Endgeräts, insbesondere eines Tablet-Computers als elektronisch mit dem Roboter-Bedienhandgerät kommunizierendes Gerät, kann das mobile Endgerät bzw. der Tablet-Computer einen programmgesteuerten elektronischen Rechner, ein Touch-Display und ein auf dem elektronischen Rechner gespeichertes Programm aufweisen, das zur Erstellung von Roboterprogrammen und/oder zum Ansteuern eines Roboters, insbesondere zum Bewegen eines Roboterarms ausgebildet ist und das über das Touch-Display zu bedienen ist.

Der erfindungsgemäße Halter ist zur manuellen Verbindung des Roboter-Bedienhandgeräts mit dem jeweiligen elektronisch kommunizierenden Gerät ausgebildet. So kann ein Benutzer, beispielsweise ein Roboterprogrammierer das Roboter-Bedienhandgerät manuell, ohne Werkzeuge zu benötigen, von dem elektronisch kommunizierenden Gerät lösen bzw. mit diesem verbinden. Der Halter ist insoweit zum manuell lösbaren, werkzeuglosen mechanischen Ankoppeln des Gehäuses an ein vom Roboter-Bedienhandgerät verschiedenes, mit der Sicherheits-Grundsteuervorrichtung elektronisch kommunizierendes Gerät ausgebildet.

Indem der Halter einen ersten Haltearm aufweist, der zum mechanischen Verbinden des Roboter-Bedienhandgeräts mit einem ersten Randabschnitt des Geräts unter Freilassen eines gegenüberliegenden Randabschnitts des Geräts ausgebildet ist und einen zweiten Haltearm aufweist, der zum mechanischen Verbinden des Roboter-Bedienhandgerät mit einem zweiten Randabschnitt des Geräts, der an den ersten Randabschnitt unter Bildung eines Eckabschnitts des Geräts anschließt, unter Freilassen eines dem zweiten Randabschnitt gegenüberliegenden Randabschnitt des Geräts, ausgebildet ist, können wahlweise verschiedene Geräte unterschiedlicher Größe mit demselben Roboter-Bedienhandgerät mechanisch verbunden werden, ohne dass konstruktive Veränderungen am Gerät und/oder dem Roboter-Bedienhandgerät vorgenommen werden müssen. Entsprechende Anpassungen können entfallen, da ein mechanisches Ankoppeln des Roboter-Bedienhandgeräts an das Gerät immer an nur an einem Eckbereich, insbesondere einem rechtwinkeligen Eckbereich des Gerätes erfolgt. So kann unabhängig von der jeweiligen Größe des Geräts, das Roboter-Bedienhandgerät mittels desselben Halters an einer Ecke des Geräts mechanisch befestigt werden. Eine solche mechanische Befestigung erfolgt dabei in einer Weise, bei der keine zusätzlichen Adaptervorrichtungen notwendig sind und keine Veränderungen an dem Gerät vorgenommen werden müssen. Mittels des erfindungsgemäßen Halters können rechteckige Geräte, insbesondere nicht-quadratische Geräte dann auch wahlweise im Hochformat oder im Querformat an das Roboter-Bedienhandgerät mechanisch angekoppelt werden. Dies gilt insbesondere für tabletartige Geräte, wie mobile Endgeräte und Tablet-Computer. Das Roboter-Bedienhandgerät kann aber auch an sonstige Geräte, wie Roboterarme, fahrbare Roboterplattformen oder sonstige Sockel mechanisch angekoppelt werden, beispielsweise an einen Eckabschnitt aneinanderstoßender Kanten einer tischartigen Ankoppelungsstelle des jeweiligen Gerätes, d.h. des Roboterarms, der fahrbaren Roboterplattformen oder des sonstigen Sockels.

Jeder Haltearm kann einen zugeordneten Randabschnitt des Gerätes formschlüssig und/oder kraftschlüssig umgreifen. Die beiden Haltearme sind stets derart ausgebildet und/oder angeordnet, dass lediglich eine einzige Ecke des Gerätes gegriffen wird, wobei die weiteren Ecken des Gerätes, insbesondere im Falle eines rechteckigen Gerätes die verbliebenen drei Ecken frei bleiben und nicht von einem Halter belegt werden. Im Falle von rechteckigen oder quadratischen Geräten sind die Haltearme ausgebildet und/oder angeordnet eine rechtwinkelige Ecke des Gerätes mechanisch zu umgreifen.

Der erste Haltearm kann eine erste nutförmige Aufnahme aufweisen, die zum Umgreifen des ersten Randabschnitts des Geräts ausgebildet ist und der zweite Haltearm kann dabei eine zweite nutförmige Aufnahme aufweisen, die zum Umgreifen des zweiten Randabschnitts des Geräts ausgebildet ist, wobei die zweite nutförmige Aufnahme mit ihrer Längserstreckung in einem Winkel, insbesondere einem rechten Winkel zur ersten nutförmigen Aufnahme angeordnet ist.

Jede nutförmige Aufnahme weist dabei einen Nutgrund auf, welcher zwei insbesondere parallel zueinander ausgerichtete Nutwände verbindet. Eine obere Nutwand der beiden Nutwände liegt auf einer Oberseite des Geräts auf, wenn das Gerät an das Roboter-Bedienhandgerät angesteckt ist. Eine untere Nutwand der beiden Nutwände liegt an einer Unterseite des Geräts an, wenn das Gerät an das Roboter-Bedienhandgerät angesteckt ist. Die beiden Nutwände und gegebenenfalls auch der Nutgrund können Profileinlagen aufweisen. Die Profileinlagen können elastisch ausgebildet sein, um sich an eine Kontur des Geräts selbsttätig anpassen zu können. Alternativ oder ergänzend können die Profileinlagen eine Querschnittsprofilgestalt aufweisen, welche zumindest annähernd oder genau an die Gestalt des Gerätes angepasst ist. Die Profileinlagen können fest in den nutförmigen Aufnahmen installiert sein. Alternativ können die Profileinlagen auch aus den nutförmigen Aufnahmen herausnehmbar eingesetzt sein. Indem die Profileinlagen verformbar sind oder auswechselbar sind, können Geräte unterschiedlichster Dicke an ein und dasselbe Roboter-Bedienhandgerät wahlweise mechanisch angekoppelt werden.

Das Gehäuse weist einen ersten Gehäuseschenkel auf, an dem der erste Haltearm angeordnet ist, und weist einen zweiten Gehäuseschenkel auf, an dem der zweite Haltearm angeordnet ist, wobei der erste Gehäuseschenkel und der zweite Gehäuseschenkel eine Ebene des Gehäuses aufspannen, die sich parallel zu einer Hauptebene des gehaltenen Gerätes erstreckt und von der sich der handgriffartige Griffabschnitt des Roboter-Bedienhandgeräts nach unten, insbesondere senkrecht zur Ebene wegerstreckt. Der handgriffartige Griffabschnitt kann insbesondere aber auch in einem Winkel von ca. 20 bis 25 Grad gegenüber der Senkrechten umorientiert angeordnet sein. So können ergonomische Randbedingungen des Menschen besser berücksichtigt werden.

Der erste Gehäuseschenkel und/oder der zweite Gehäuseschenkel können einteilig mit dem Gehäuse ausgebildet sein. Der erste Gehäuseschenkel und der zweite Gehäuseschenkel können in einem festen Winkel, insbesondere in einem festen rechten Winkel zueinander angeordnet sein. Die beiden Gehäuseschenkel können mit ihren Längserstreckungen eine Ebene aufspannen parallel zu der das Gerät ausgerichtet ist, wenn es an dem Roboter-Bedienhandgerät mechanisch angekoppelt ist.

Der erste Haltearm und der zweite Halterarm, insbesondere die erste nutförmige Aufnahme und die zweite nutförmige Aufnahme können von einem im Querschnitt L-förmigen oder U-förmigen Haltewinkel und einer relativ zum Haltewinkel verstellbar gelagerten Andruckplatte gebildet werden.

Im Falle eines L-förmigen Querschnitts bildet ein Schenkel des L-förmigen Haltearms bzw. der L-förmigen Aufnahme den Nutgrund und der andere Schenkel bildet eine der Nutwände, die entweder an der Oberseite oder der Unterseite des Geräts anliegt. Die verstellbar gelagerte Andruckplatte bildet dabei die andere der beiden Nutwände, die entweder an der Oberseite oder der Unterseite des Geräts anliegt.

Die Andruckplatte kann aus einer Grundstellung heraus federkraftrückstellend in eine Aufnahmestellung verstellbar gelagert sein, in welcher die beiden winkelig aneinanderstoßenden Randabschnitte des Geräts bei an das Roboter-Bedienhandgerät angesetztem Gerät von dem ersten Haltearm und dem zweiten Halterarm, insbesondere der ersten nutförmigen Aufnahme und der zweiten nutförmigen Aufnahme formschlüssig und/oder kraftschlüssig aufgenommen sind.

Indem die Andruckplatte kann aus einer Grundstellung heraus federkraftrückstellend in eine Aufnahmestellung verstellbar gelagert ist, kann insoweit die Breite der Nut des Haltearms bzw. der nutförmigen Aufnahme verändert werden. Anders ausgedrückt können dadurch die beiden gegenüberliegenden Nutwände geöffnet werden oder erweitert werden, so dass der jeweilige Randabschnitt des Gerätes leicht, d.h. mit geringem manuellen Kraftaufwand eingefügt werden kann. Die Andruckplatte kann mit einer Federvorrichtung verbunden sein, welche die Andruckplatte selbsttätig gegen Grundstellung drückt. Ist ein Gerät eingefügt, dann drückt insoweit die Federvorrichtung die Andruckplatte gegen das Gerät, beispielsweise gegen die Unterseite des Geräts und klemmt das Gerät an seinem Randabschnitt an der gegenüberliegenden Nutwand fest, die an der Oberseite des Geräts zu liegen kommt.

Der erste Haltearm und der zweite Halterarm, insbesondere die erste nutförmige Aufnahme und die zweite nutförmige Aufnahme können eine Anschlagsfläche aufweisen, die zum Anliegen einer Vorderseite des Geräts in einer Aufnahmeanordnung des Geräts an dem Roboter-Bedienhandgerät ausgebildet ist, und die Andruckplatte zum Anliegen an einer Rückseite des Geräts ausgebildet ist, wobei die Andruckplatte zur Aufnahme unterschiedlich dicker Geräte relativ zur Anschlagsfläche verstellbar gelagert ist.

Die Andruckplatte und die Anschlagsfläche begrenzen insoweit die nutförmige Aufnahme, in welche das Gerät eingefügt wird. Indem die Andruckplatte relativ zur Anschlagsfläche verstellbar gelagert ist, kann die Größe der nutförmigen Aufnahme an die Dicke des jeweils einzusetzenden Geräts angepasst werden.

Die Andruckplatte kann relativ zur Anschlagsfläche linear verstellbar gelagert sein. Dazu kann das Roboter-Bedienhandgerät eine Linearführung aufweisen, welche eine linear verstellbare Lagerung der Andruckplatte relativ zur Anschlagsfläche erlaubt. Die Linearführung kann dabei eine Federvorrichtung aufweisen, welche selbsttätig die Andruckplatte in eine Grundstellung oder gegen die Anschlagsfläche bewegt. In der Grundstellung der Andruckplatte kann die Andruckplatte bündig, d.h. in derselben Ebene liegend, an die Anschlagsfläche anschließen.

Die verstellbare Andruckplatte kann zusammen mit dem handgriffartigen Griffabschnitt linear verstellbar gelagert sein.

Die verstellbare Andruckplatte kann aber auch relativ zur Anschlagsfläche und relativ zum handgriffartigen Griffabschnitt linear verstellbar gelagert sein, insbesondere der handgriffartige Griffabschnitt bezüglich der Anschlagsfläche starr befestigt sein.

Die Andruckplatte kann relativ zur Anschlagsfläche schwenkbar gelagert sein.

Die Andruckplatte kann in einer solchen Ausführungsform eine Art Verschlussklappe einer nutförmigen Aufnahme bilden. In einer Grundstellung, in der das Gerät entnommen ist, kann die schwenkbar gelagerte Andruckplatte die nutförmigen Aufnahme abdecken bzw. verschließen. Wird dann das Gerät herangeführt drückt eine Seitenkante des Geräts flächig gegen die Andruckplatte, wodurch diese nach Innen in den Hohlraum der nutförmigen Aufnahme einschwenkt. Der Randabschnitt des Geräts kann dann in der nutförmigen Aufnahme aufgenommen werden. Die schwenkbar gelagerte Andruckplatte kann federvorgespannt gelagert sein, so dass die Andruckplatte in einer in die nutförmigen Aufnahme aufgenommenen Position des Geräts gegen die Oberseite oder wahlweise gegen die Unterseite des Geräts drückt und dadurch das Gerät in der nutförmigen Aufnahme festklemmt. Wird versucht das Gerät herauszuziehen, so wird der Druck der schwenkbar gelagerten Andruckplatte gegen das Gerät zusätzlich verstärkt, wodurch eine besonders zuverlässige mechanische Ankoppelung des Geräts an das Roboter-Bedienhandgerät erreicht wird.

Der erste Haltearm und der zweite Halterarm, insbesondere die erste nutförmige Aufnahme und die zweite nutförmige Aufnahme können ein Klemmprofil aus elastischem Material, insbesondere ein Hohlkammerprofil aus elastischem Material aufweisen.

Das Klemmprofil kann wenigstens eine, insbesondere zwei keilförmige Innenwände aufweisen. Dadurch kann das Gerät eingesteckt werden und das Klemmprofil drückt an gegenüberliegenden Seiten, d.h. an der Oberseite und der Unterseite des Geräts gegen das Gerät und klemmt dieses dadurch fest. Die Klemmprofile können aus einem elastomeren Werkstoff hergestellt sein.

Das Klemmprofil, insbesondere das Hohlkammerprofil kann mittels eines Fluids, insbesondere Druckluft zur Erzeugung einer Klemmkraft expandierbar sein. Demgemäß kann das Roboter-Bedienhandgerät über einen Fluidbehälter verfügen und/oder eine Fluidpumpe aufweisen. Mittels der Fluidpumpe kann das Fluid in wenigstens eine Hohlkammer des Hohlkammerprofil gepumpt werden, so dass sich das Hohlkammerprofil vergrößert und den Randabschnitt des Gerätes innerhalb der nutförmigen Aufnahme dadurch einspannen kann.

In allen Ausführungsformen kann die Sicherheits-Grundsteuervorrichtung wenigstens ein Nothalt-Auslösemittel, wenigstens eine Zustimmungseinrichtung, wenigstens ein Betriebsartauswahlmittel und/oder wenigstens ein Anzeigemittel, insbesondere wenigstens ein elektronisches Display aufweisen.

Generell kann das Roboter-Bedienhandgerät einen Halter, insbesondere einen Halter wie beschrieben aufweisen, der zum Befestigen des Roboter-Bedienhandgerät an einem Gerät, insbesondere einem Roboterarm, einem Steuerungssockel, einer fahrbare Roboterplattform, und/oder einem mobilen Endgerät, insbesondere einem Tablet-Computer ausgebildet ist.

Der erfindungsgemäß beschriebene Halter kann neben der Ankopplungsmöglichkeit eines mobilen Endgeräts, insbesondere eines Tablet-Computers, ausgebildet sein, das Roboter-Bedienhandgerät an einem korrespondierendem Rand eines Roboterarms, eines Steuerungssockels und/oder einer fahrbare Roboterplattform mechanisch ankoppeln zu können. Dazu kann der Roboterarm, der Steuerungssockel und/oder die fahrbare Roboterplattform eine Leiste aufweisen, die einen Randabschnitt aufweist, an dem der Halter, insbesondere die nutförmige Aufnahme des Roboter-Bedienhandgeräts mechanisch ankoppelbar ist.

Das Roboter-Bedienhandgerät kann jedoch auch einen von dem erfindungsgemäß beschriebenen Halter separaten, d.h. zusätzlichen Halter aufweisen, welcher ausgebildet ist, das Roboter-Bedienhandgerät mechanisch mit dem Roboterarm, der Steuerungssockel und/oder die fahrbare Roboterplattform verbinden zu können. Alternativ kann der Roboterarm, der Steuerungssockel und/oder die fahrbare Roboterplattform eine Aufnahmenische aufweisen, in welche das Roboter-Bedienhandgerät bzw. dessen Gehäuse zumindest teilweise oder sogar vollständig eingesetzt werden kann.

In allen Ausführungsformen kann das Roboter-Bedienhandgerät ein manuelles Betätigungsmittel, insbesondere ein am handgriffartigen Griffabschnitt angeordnetes Betätigungsmittel aufweisen, das ausgebildet ist, in einer Verriegelungsstellung des Betätigungsmittels den Halter in einer Klemmstellung zu halten und in einer Entriegelungsstellung des Betätigungsmittels den Halter aus seiner Klemmstellung freizugeben.

Das Betätigungsmittel kann in den handgriffartigen Griffabschnitt integriert sein. So kann das Betätigungsmittel ausgebildet sein, lediglich mit einem Finger einer Hand betätigt werden zu können, wenn ein Benutzer das Roboter-Bedienhandgerät an dem handgriffartigen Griffabschnitt in der Hand hält. So kann der Halter einhändig freigegeben werden und das Gerät mit der anderen Hand von dem Roboter-Bedienhandgerät entfernt werden. Wird das Gerät mechanisch an das Roboter-Bedienhandgerät angekoppelt, kann das Betätigungsmittel selbsttätig verriegeln und den Halter in der Klemmstellung arretieren.

Das erfindungsgemäße Roboter-Bedienhandgerät kann je nach Ausführungsform eine oder mehrere der folgenden Vorteile bieten.

Mit dem erfindungsgemäßen Halter kann ein Roboter-bedienhandgerät geschaffen werden, der eine universelle Kopplungs- und Haltemöglichkeit mit nahezu beliebigen, d.h. größen- und herstellerunabhängigen Tablet-Computern ermöglicht. Mit dem erfindungsgemäßen Halter kann das Roboter-bedienhandgerät sowohl für Rechtshänder, als auch für Linkshänder verwendet werden. Außerdem können die Geräte, insbesondere die Tablet-Computer wahlweise in Querausrichtung oder Längsausrichtung verwendet werden, ohne Veränderungen oder Anpassungen von Elementen am Tablet-Computer oder am Roboter-Bedienhandgerät vornehmen zu müssen.

Die Erfindung ermöglicht auch die Verwendung des erfindungsgemäßen Roboter-Bedienhandgeräts in der mobilen Robotik, sodass auch dort stets ein sicherer Zustand des Systems gewährleistet wird.

Die Erfindung ermöglicht auch die Verwendung des erfindungsgemäßen Roboter-Bedienhandgeräts in der stationären Robotik, sodass auch dort stets ein sicherer Zustand des Systems gewährleistet wird.

Alternativ zum manuellen Bewegen eines Roboters, ob mobil oder stationär, beispielsweise über eine 6D-Maus oder die Bedientasten am Handbediengerät bzw. über Hardware- oder Softwaretasten, kann das robotische System auch durch Geste wie dem Handführen gesteuert werden. Hier kann das Handbediengerät über einen Standardadapter auch direkt am Roboter bzw. an der mobilen Plattform angebracht werden. Der Benutzer kann über die 6D-Maus kraftfrei das System in die gewünschte Lage führen. Alternativ kann auch die 6D-Maus über eine mechanische Adapterschnittstelle auf der Oberseite direkt mit dem zu bewegenden System gekoppelt werden.

Werden die Bewegungsrichtungen automatisch in der Steuerung invertiert, so kann der Nutzer sehr einfach und intuitiv jedes beliebige Robotersystem handführen, indem er insbesondere einhändig den Griff in die gewünschte Richtung bewegt und/oder dreht und dabei gleichzeitig die Zustimmtaste betätigt. Durch Drücken der Teach-Tasten werden die Punkte im Programm dann hinterlegt.

Die Bedienung eines redundanten Roboter-Systems kann ebenfalls intuitiv und direkt über die Hardwaretasten, wie 6D-Maus oder Einzeltaster erfolgen, indem die Freiheitsgrade geeignet gruppenweise angesteuert und Nullraumbewegungen effizient genutzt werden.

Die vorliegende Erfindung soll ein mechanisches Kopplungskonzept technisch realisieren. Dabei liegt ein Schwerpunkt auf einem einfachen, schnellen und stabilen Koppel- und Entkoppelprinzip, welches die Einbindung von beliebigen Geräten, wie insbesondere Tablet-Computern auch mit unterschiedlichen Abmessungen und Tasten- bzw. Anschlussanordnungen ermöglicht. Hierbei wird bewusst auf Sonderlösungen verzichtet, die Anpassungen, Veränderungen oder spezielle Merkmale am Gerät benötigen.

Vom kleinen Smartphones bis zu großen Industrie-Tablet-Computern sollen möglichst alle Modelle unterschiedlicherer Hersteller mechanisch einfach mit dem Roboter-Bedienhandgerät verbunden werden können, damit der Benutzer sämtliche Sicherheitsschalter, sowie roboterspezifische Tasten zusammen mit dem Tablet-Computer bequem in einer Hand halten und bedienen kann. Ein schneller Wechsel von Hochformat auf Querformat oder umgekehrt ist durch einfache Geräteneuorientierung am Roboter-Bedienhandgerät ebenso möglich, wie der Wechsel der Haltehand von Rechtshänderbedienung auf Linkshänderbedienung.

Die Wirkflächen der Klemmung beschränken sich nur auf einen Eckbereich und die beiden dazugehörigen Schenkel des Gerätes, insbesondere des Tablet-Computers. Dies ermöglicht einerseits eine stabile Kraftleitung und Momentenabstützung auf kleinstem Bauraum und andererseits eine nur minimale Abdeckung der Geräteoberseite bzw. eines Displays. Die hauptsächlichen Klemmstellen am Gerät, insbesondere am Tablet-Computer sollen sich zumindest weitgehend auf die Unterseite sowie den Randbereich neben dem Display beschränken.

Der erfindungsgemäße Halter liefert eine optimale Stabilität der Klemmverbindung mit zugleich den oben beschriebenen Vorteilen. So ist eine sichere und zugleich einfach aufzubringende Klemmfunktion gegeben, die ein versehentliches Herausfallen des Geräts selbst beim Schütteln verhindert. Obwohl die Erfindung im Weiteren anhand eines Tablet-Computers näher und detailierter erläutert ist, können diese Aspekte generell auch für anderen Arten von Geräten erfindungsgemäß zutreffen.

Dazu kann die Tabletlage in Querrichtung durch zwei seitliche Anschläge in einer Eckanordnung definiert anliegen, während zwei zueinander bewegliche L-förmige Leisten mit Reibelementen das Tablet am Rand der Ober- und Unterseite sicher im Bereich einer Ecke einklemmen. Die Normalkraft zur Reibung wird bei einer beispielhaften Variante mit einer Mittelplatte über eine Schraubenfeder mit steigender Kennlinie erzeugt, die sicherstellt, dass kleine flache Tablets oder Smartphones leicht geklemmt werden, und schwerere hohe Tablet stärker geklemmt werden. Die Leisten oder Klemmleisten können an den Haltearmen bzw. an den Nuten der Haltearme ausgebildet sein, bzw. von diesen direkt gebildet werden.

Eine Relativbewegung der beiden Leisten umfasst dabei das Spektrum an unterschiedlichen Tablethöhen, die geklemmt werden soll, was im Allgemeinen zwischen 0 mm und 20 mm sein kann. Eine parallele Führung der Leisten kann über eine einfache Schiene-Schlitten-Lösung realisiert werden.

Wird der Handgriff zum Halten des Handbediengeräts inkl. Tablet während der Benutzung mit den untenliegenden Klemmleisten fest verbunden, so werden Bedienkräfte auf das Tablet meist direkt auf den Handgriff geleitet. Dies entlastet die Klemmverbindung und vermeidet ein versehentliches Herausschieben des Tablets aus der Halterung.

Zum Einlegen und Herausnehmen des Tablets werden die angefederten Klemmleisten durch eine Handbedienkraft an einem zusätzlichen Auslösetaster so auseinandergedrückt, dass eine leichtgängige Tablethandhabung möglich ist. Dabei wird der Auslösetaster in seiner Form so ausgeführt, dass er zugleich als eine Art Haltegriff für das Handbediengerät dient. Dies kann notwendig sein, da der Bediener mit einer Hand das Handbediengerät halten muss, während er mit der anderen das Tablet einlegt bzw. herausnimmt. Da dieser Vorgang eine Betätigung des Auslösetaster erfordert, kann dieser in unmittelbarer der Nähe des Haltegriffs liegen oder mit dem Haltegriff eine Einheit bilden. Nach dem Einlegen greift der Benutzer vom Haltegriff zum Handgriff des Handbediengeräts, welcher zum Tragen und Bedienen des Geräts vorgesehen ist. Haltegriff und Handgriff sind im Allgemeinen zwei unterschiedliche Formelemente am Handbediengerät, die in Sonderfällen der Ausführung auch zusammengefasst werden können.

Optionale oben- und untenliegende Reibflächen der L-förmigen Leisten können so angeordnet werden, dass sie sich gegenüberliegen d.h. bei Nullabstand berühren oder dass sie leicht versetzt aneinander vorbeilaufen. Dabei wird das Tablet entweder durch Pressung oder durch Scherung geklemmt. Werden die beiden Reibflächen wie im ersten Fall in der Nullstellung, wenn kein Tablet eingelegt ist, aufeinander gedrückt, so liegen sie nur in der kurzen Zeit des Koppelvorgangs offen. Hierdurch kann ein Reibkraftverlust, hervorgerufen durch Verschmutzung oder Verunreinigung der Kontaktflächen, deutlich reduziert werden.

Die mit dem Handgriff verbundene untere L-förmige Leiste kann im Mittelteil flächig so erweitert werden, dass Bauraum für ein flaches einfaches Display entsteht, welches bei Einlegen eines Tablets durch dieses verdeckt und damit funktional ersetzt wird. Diese Mittelplatte hat in Kombination mit dem erläuterten Klemmprinzip den wesentlichen Vorteil, dass optisch Spalte vermieden werden und ein einheitlich geschlossenes Erscheinungsbild entsteht, sowohl mit als auch ohne Tablet-Einsatz. Einfach gesagt und mit anderen Worten ist der Klemmspalt immer genau so breit, wie er gerade sein muss. Ohne Tablet ist der Spalt somit komplett geschlossen und die Mittelplatte mit dem Display und den unteren Klemmleisten geht optisch glatt oder allenfalls mit minimaler Stufe in die oberen Klemmleisten über, auf denen die Bedien- und Sicherheitstasten sitzen. Dieses unterstreicht den hochwertigen Charakter des Handbediengeräts, eine vollwertige und eigenständige kompakte Einheit zu sein.

Das Roboter-Bedienhandgerät kann eine portable und/oder kompakte Einheit bilden, die einfach anzukoppeln, abzukoppeln und zu transportieren, insbesondere manuell zu tragen ist. Durch das Roboter-Bedienhandgerät können die Leistungsfähigkeit, die Displayqualität und/oder die Bedienungsfreundlichkeit neuester Geräte, wie mobile Endgeräte, wie bspw. Tablet-Computer zur Steuerung eines Roboters genutzt werden.

Integrations- und Kopplungsmöglichkeiten für mehrere Tabletmodelle und -baureihen von unterschiedlichen Herstellern können dabei vorgesehen sein. Auch neu erhältliche Modelle können mit wenig Aufwand schnell eingebunden und genutzt werden. Benutzerwünsche und Benutzeranforderungen an Hard- und Software können durch individuelle Wahl des mobilen Endgeräts berücksichtigt werden. Der Nutzer des Roboters profitiert von der ständigen Weiterentwicklung der mobilen Endgeräte, insbesondere bei Tabletcomputern und deren Leistung. Ein neues Gerät kann einfach eingebunden werden, dies ist mit geringem Aufwand und geringen Kosten möglich. Unterschiedliche Benutzer können ihre unterschiedlichen mobilen Endgeräte, insbesondere Tabletcomputer mechanisch und steuerungstechnisch auf einfache Weise wahlweise mit demselben Roboter verbinden. Der Benutzer kann aus einem großen Spektrum an mobilen Endgeräten, wie Tabletcomputer heraussuchen, welche Leistungs- und Preiskategorie für ihn am zielführendsten ist. Es kann auch eine Mischung möglich sein. So können einfache mobile Endgeräte bzw. Tabletcomputer für Wartungs- und Servicemitarbeiter vorgesehen sein und sehr leistungsfähige mobile Endgeräte bzw. Tabletcomputer beispielsweise für Applikationsentwickler oder Tester vorgesehen sein.

Das Roboter-Bedienhandgerät kann insoweit ein Basisbediengerät für den Roboter bilden. Es kann eine Grundfunktionalität am Roboter bieten, vor allem hinsichtlich einer Sicherheitsfunktionalität. Das Roboter-Bedienhandgerät alleine kann kostengünstig und standardisiert aufgebaut sein. Es kann am Roboter verbleiben bzw. in der Nähe des Roboters oder von diesem entfernt werden. Es kann ein Roboter-Bedienhandgerät pro Roboter vorgesehen sein. Es kann eingerichtet sein, lediglich einfache mechanische und elektrische Kopplungsmöglichkeiten aufzuweisen, wobei die Sicherheits-Grundsteuervorrichtung nicht verändert oder erneuert werden muss, sondern es ausreicht beispielsweise das mobile Endgerät auszutauschen oder zu ersetzen, wenn fortschrittliche Neuerungen vorgesehen werden sollen. Das Roboter-Bedienhandgerät kann optisch ansprechend und wie eine vollwertige Einheit, also auch ohne Gerät bzw. mobiles Endgerät zumindest in Grundfunktionen funktionsfähig ausgebildet sein.

Mittels des erfindungsgemäßen Halters kann das Roboter-Bedienhandgerät wahlweise autark, d.h. getrennt von sonstigen mit dem Roboter-Bedienhandgerät elektronisch kommunizierenden Geräten genutzt werden, oder es kann in einer insbesondere vorübergehenden mechanischen Verbindung mit dem jeweiligen Gerät verbunden sein. So kann das Roboter-Bedienhandgerät wahlweise, insbesondere zeitlich begrenzt, an unterschiedlichste Geräte mechanisch angekoppelt werden. Außerdem kann mittels des erfindungsgemäßen Halters kann das Roboter-Bedienhandgerät an verschiedenen Stellen desselben Geräts und/oder in verschiedenen Orientierungen des Roboter-Bedienhandgeräts an dem jeweiligen Gerät mechanisch angekoppelt werden. So können unterschiedliche ergonomische Gestaltungen von Roboter-Bedienhandgerät und Gerät erzeugt werden. Beispielsweise kann dasselbe Gerät, wie bspw. ein mobiles Endgerät, wie ein Tabletcomputer durch verschiedene Ansteckorte des Roboter-Bedienhandgeräts von einem Rechtshandbetrieb in einen Linkshandbetrieb und/oder in ein Längsformat oder Querformat verändert werden.

Generell ist durch den erfindungsgemäßen Halter zumindest eine mechanische Verbindung zwischen dem Roboter-Bedienhandgerät und dem elektronisch kommunizierenden Gerät vorgesehen. Das Roboter-Bedienhandgerät seinerseits ist im Allgemeinen mit einer Robotersteuerung steuerungstechnisch verbunden, derart, dass durch Bedienen der Sicherheits-Grundsteuervorrichtung des Roboter-Bedienhandgeräts die Robotersteuerung angesteuert wird, um beispielsweise den Roboterarm oder eine fahrbare Roboterplattform angesteuert zu bewegen. Eine steuerungstechnische Verbindung zwischen Robotersteuerung, Roboter-Bedienhandgerät und elektronisch kommunizierendem Gerät, insbesondere mobilem Endgerät, wie ein Tabletcomputer kann eine elektrische Verbindung sein. Dabei kann das Roboter-Bedienhandgerät entweder drahtlos oder drahtgebunden sicher mit der Robotersteuerung kommunizieren. Außerdem kann das elektronisch kommunizierende Gerät, insbesondere das mobile Endgerät, wie der Tabletcomputer, direkt drahtlos an die Robotersteuerung angebunden sein oder elektrisch mit dem Roboter-Bedienhandgerät gekoppelt sein und so die bereits bestehende Kommunikation des Roboter-Bedienhandgeräts zur Robotersteuerung mitnutzen. Die Befehle oder Signale, die über das elektronisch kommunizierende Gerät, insbesondere über das mobile Endgerät, wie dem Tabletcomputer an die Robotersteuerung übertragen werden, können in sicherer Technik oder nicht-sicherer Technik übertragen werden. Das Roboter-Bedienhandgerät mit seinen sicherheitsrelevanten Bedienfunktionalitäten, wie Notaus- oder Zustimmschalter muss jedoch sicher mit der Robotersteuerung verbunden sein. Eine drahtlose Schnittstelle des elektronisch kommunizierenden Geräts, insbesondere des mobilen Endgeräts, wie dem Tabletcomputer kann auch am roboterfernen Arbeitsplatz für eine drahtlose Kommunikation beispielsweise mit einer externen Tastatur, Maus und/oder einem externen Monitor genutzt werden.

Die Erfindung kann also je nach Ausführungsform die beiden Welten von sicherer, zuverlässiger Industriesteuerung und fortschrittlicher, benutzerfreundlicher und leistungsstarker Konsumelektronik miteinander verbinden und damit neue Wege in der effizienten und einfachen Roboterbedienung und Robotersteuerung ermöglichen.

Diese Erfindung beschreibt das Grundkonzept sowie exemplarisch Ausführungsformen einer temporären mechanischen Koppelung eines vom Roboter-Bedienhandgerät separaten elektronisch kommunizierenden Geräts, insbesondere eines mobilen Endgeräts mit sicherheitsrelevanten roboter- und/oder anlagenspezifischen Bediengrundelementen, die auf dem Roboter-Bedienhandgerät, d.h. der Sicherheits-Grundsteuervorrichtung des Roboter-Bedienhandgeräts vorhanden sind.

Durch die technische Lösung einer mechanischen und steuerungstechnischen Kopplung, durch Anbindung des Roboter-Bedienhandgeräts an ein separates elektronisch kommunizierendes Gerät, wie beispielsweise ein mobiles Endgerät, wie eines Tabletcomputers an eine Robotersteuerung um einen Roboter zu steuern, können entsprechend unterschiedliche Gerätesysteme geschaffen werden, die sich zu vielerlei Bedienszenarien kombinieren lassen, wie dies u.a. in den Ausführungsbeispielen der Figuren exemplarisch aufgezeigt ist.

Die Sicherheits-Grundsteuervorrichtung kann in allen Ausführungsvarianten wenigstens ein Nothalt-Auslösemittel, wenigstens eine Zustimmungseinrichtung, wenigstens ein Betriebsartauswahlmittel und/oder wenigstens ein Anzeigemittel, insbesondere wenigstens ein elektronisches Display aufweisen.

Der handgriffartige Griffabschnitt des Roboter-Bedienhandgeräts kann in Art beispielsweise eines Skistockgriffes oder eines Pistolengriffes ausgebildet sein. Der handgriffartige Griffabschnitt des Roboter-Bedienhandgeräts kann insoweit einen Umfang aufweisen, der höchstens so groß ist, dass sein Gehäuseabschnitt an seiner Mantelwand zumindest annähernd vollständig von der Hand eines Benutzers umfasst werden kann. An der Mantelwand können dazu muldenförmige Einbuchtungen vorgesehen sein, welche zum Anlegen jeweils eines Fingers einer Hand des Benutzers an jeweils eine muldenförmige Einbuchtung der Mantelwand ausgebildet sind. Die muldenförmigen Einbuchtungen können demgemäß in Größe, Form und Ausrichtung hinsichtlich ergonomischer Aspekte an eine Hand eines Menschen angepasst sein. Ein Oberabschnitt der Mantelwand kann in einem manuell gegriffenen Zustand des Roboter-Bedienhandgeräts über die Faust des haltenden Benutzers nach oben hinausstehen und den erfindungsgemäßen Halter aufweisen. Ein Unterabschnitt der Mantelwand kann in einem manuell gegriffenen Zustand des Roboter-Bedienhandgeräts unter der Faust des haltenden Benutzers nach unten hinausstehen.

Die Gesamtzeit in der der Benutzer den aktiven Roboter bedient, ihn programmiert, manuell verfährt, analysiert oder Einstellungen oder Parameter ändert, ist in den meisten Fällen im Vergleich zur Gesamtbetriebszeit sehr gering. In dieser kurzen Zeit ist ein möglichst hochwertiges, leistungsfähiges und benutzerfreundliches Bediengerät wünschenswert, um ein effizientes, schnelles und fehlerfreies Arbeiten mit minimaler Stillstandszeit des Roboters zu ermöglichen. In der restlichen Zeit, d.h. während des normalen Betriebs des Roboters im Automatikbetrieb, sind nur wenige Grundfunktionen, hauptsächlich Sicherheitsfunktionen und Statusanzeigen, zur Bedienung erforderlich. eine hohe Funktionalität des Bediengeräts wird somit nicht dauerhaft sondern nur sehr gezielt und kurzzeitig benötigt.

Ein Ansatz, um die Funktionalität temporär deutlich zu erhöhen, ist die Trennung zwischen hochwertigen Bedienfunktionen und einfachen Basisfunktionen in zwei räumlich getrennte Einheiten. Die beiden Einheiten können neben unterschiedlichen Bedienfunktionalitäten auch unterschiedlichen Sicherheitsanforderungen genügen.

Eine temporäre Kopplung dieser Einheiten ermöglicht eine Doppelvergabe von Funktionen, wie beispielsweise Sicherheits-Hardware-Tasten, zu vermeiden und damit Kosten und Bauraum zu reduzieren.

Zielführend, sowohl in bedienungstechnischer also auch in wirtschaftlicher Hinsicht ist ein Bedienkonzept, bei dem ein kostengünstiges Basisbediengerät mit Grundfunktionalität und ein leistungsfähiger Tabletcomputer aus dem Konsumentenbereich verwendet wird.

Die hier vorgestellte Erfindung betrifft ein solches Basisbediengerät, d.h. ein Roboter-Bedienhandgerät, welches als ein multifunktionaler Bediengriff ausgeführt ist und diversere Koppelmöglichkeiten zu stationären oder mobilen Maschinen, sowie zu Robotern oder unterschiedlichen Bediengeräten aufweist. Er dient als universelles Basisgerät und besitzt je nach Koppelungspartner, d.h. elektronisch kommunizierendem Gerät eine unterschiedliche Funktionalität und unterschiedlichen Funktionsumfang. Die Erfindung bietet wesentliche Vorteile gegenüber bekannten Konzepten und aktuellen auf dem Markt erhältlichen Bedien- und Eingabegeräten, wie beispielsweise, dass ein einziges universelles Basisgerät für unterschiedlichste Anwendungsfelder in der Robotik verwendet werden kann, welches mit unterschiedlichen Partnern koppelbar ist, wodurch sich die Funktionalität abhängig von Koppelpartner anpassbar ist. Als Koppelpartner können beispielsweise aktive Systeme, wie Roboter und mobile Plattformen, und/oder passive Systeme, wie Umgebung und Zellenrahmen, sowie weitere Eingabegeräte, wie Tablet-Computer, Smartphones und/oder Mess- und Analysesysteme, wie Kamera-/ Trackingsysteme oder Kraftmesssensoren verwendet werden. Die spezielle Ausführung des Basisgeräts mit einem handgriffartigen Griffabschnitt bietet eine ergonomische und intuitive Bedienung bei gleichzeitig kompakten und handlichen Abmessungen. Die ergonomische Griffform sowie die Hardwaretasten zur Sicherheitsfunktionalität und Grundbedienung werden auch im gekoppelten Zustand benötigt, um den Koppelpartner, beispielsweise ein Table-Computer zu halten oder beispielsweise einen Roboter zu führen und dabei stets auf Funktionen wie Zustimmung und Not-Aus zugreifen zu können. Die wichtigsten Statusmeldungen und Systemzustände können auch ohne gekoppelten Tablet-Computer direkt am Bediengriff angezeigt werden.

Das Koppelkonzept ermöglicht eine freie Erweiterbarkeit und Anpassbarkeit von Koppelpartner und möglichen Koppelstellen, die im Wesentlichen losgelöst von geometrischen Ausprägungen der Koppelpartner ist. So wären demnach beliebige Tablet-Computermodelle mit unterschiedlichen Größen, Tastenpositionen und Anschlüssen einfach mit dem erfindungsgemäßen Roboter-Bedienhandgerät zu verbinden.

Um die stark unterschiedlichen Anforderungen an ein Roboterbediengerät während des Lebenszyklus erfüllen zu können, kann entweder für jede Robotereinheit ein sehr hochwertiges Bediengerät verwendet werden oder im Sinne dieser Erfindung ein minimalistischer Basisbediengriff die erforderlichen Grundsicherheitsfunktionen bereitstellen.

Dieser einfache und kostengünstige Basisbediengriff, d.h. ein erfindungsgemäßes Roboter-Bedienhandgerät, kann temporär mit einem weiteren, diesmal sehr hochwertigen separaten Gerät, wie beispielsweise einem Standard Tablet-Computer gekoppelt werden, um eine kurzzeitige hohe Leistungsfähigkeit bei der Bedienung zu ermöglichen. Dabei kann jede robotische Einheit, wie Roboter oder mobile Plattform, ggf. zumindest jede Zelle einen solchen Basisbediengriff besitzen. Die hochwertigen separaten Geräte sind dabei nicht festen Einheiten von Roboter-Bedienhandgeräten zugeordnet und können somit immer bedarfsgerecht dort eingesetzt werden, wo diese benötigt werden. Die Anzahl dieser, beispielsweise Tablet-Computer ist abhängig von der Art und Größe der Gesamtanlage und kann vom Benutzer eigenständig und kurzfristig problemlos vergrößert werden.

Die Erfindung stellt somit ein Bedienkonzept vor, welches Ressourcen effizient dort einsetzt, wo sie benötigt werden und trotzdem jederzeit eine sichere Bedienung der Grundfunktionen vor Ort an der Einheit ermöglicht. Dies ermöglicht, dem Benutzer eine sehr leistungsfähige Roboterbedienung anzubieten, die stets dem aktuellen Stand der Technik entspricht, dem Benutzer eine sehr wirtschaftliche Roboterbedienung anzubieten, welche die eingesetzten Ressourcen immer optimal ausnutzt und unter anderem auf Standard-Eingabeeinheiten aufbaut, dem Benutzer eine sehr sichere Roboterbedienung bietet, die alle erforderlichen Richtlinien und Normen erfüllt und dem Benutzer eine sehr intuitive, effiziente und individuelle Roboterbedienung bietet, die über die grafische Benutzeroberfläche des Tablets komplett frei anwendungs- und benutzerspezifisch konfigurierbar ist.

Das Roboter-Bedienhandgeräten kann demgemäß ausgebildet sein, wahlweise eines von mehreren möglichen, unterschiedlichen mobilen Endgeräten, insbesondere mobile Endgeräte unterschiedlicher Modelltypen und/oder Größen mit derselben Sicherheits-Grundsteuervorrichtung verbinden zu können und das ausgewählte mobile Endgerät in einem eingesetzten oder angesetzten Zustand mit der Sicherheits-Grundsteuervorrichtung mechanisch zu verbinden.

Ziel der Erfindung kann es demnach sein, ein industrietaugliches Roboter-Bedienhandgerät zu schaffen, das in Hinblick auf Steuerungsstandard und Sicherheitsvorschriften sowie Umwelteinflüssen und/oder Ergonomie bei der Bedienung auf einem fortschrittlichen Niveau gehalten werden kann. Indem der erfindungsgemäße Halter es ermöglicht, bspw. aktuelle handelsübliche mobile Endgeräte mit einer bestehenden Sicherheits-Grundsteuervorrichtung zu verbinden, können die sehr leistungsfähigen aktuell auf dem Markt erhältlichen mobilen Endgeräte zur Steuerung des industrietauglichen Roboter-Bedienhandgeräts genutzt werden.

Mittels des erfindungsgemäßen Halters können unterschiedlich gestaltete mobile Endgeräte mechanisch mit der insbesondere einheitlichen Sicherheits-Grundsteuervorrichtung besonders einfach und flexibel verbunden werden. Mittels des erfindungsgemäßen Halters kann beispielsweise das mobile Endgerät sogar manuell durch einen Benutzer von der Sicherheits-Grundsteuervorrichtung wahlweise getrennt oder verbunden werden. So können insoweit zwei oder mehrere Geräte, d.h. die einheitliche Sicherheits-Grundsteuervorrichtung und das ausgewählte mobile Endgerät miteinander kombiniert werden, oder jedes Einzelgerät separat verwendet werden. Das Roboter-Bedienhandgerät, insbesondere die Sicherheits-Grundsteuervorrichtung ist dabei insoweit autark in einem sicheren Betrieb betriebsfähig und beispielsweise das abgenommene Gerät auch selbstständig betriebsfähig, wenn auch nicht in sicherer Technik. Folglich können insoweit mehrere unterschiedliche vollwertige Bediengeräte für unterschiedliche Szenarien erzeugt werden.

Abweichend zu bekannten Lösungen wird dem Benutzer mit dem erfindungsgemäßen Roboter-Bedienhandgerät außerdem die Möglichkeit gegeben, einen Roboter jederzeit, mit einem dem Roboter zugeordneten, insbesondere unmittelbar mit diesem mechanisch verbundenen Roboter-Bedienhandgerät in den gängigen und/oder minimalen Grundfunktionen manuell zu steuern oder anzuhalten. Dieses einfache Roboter-Bedienhandgerät kann durch mechanische und steuerungstechnische Kopplung mit einem Roboter, einer fahrbaren Roboterplattform und/oder einem mobilen Endgerät, wie beispielsweise einem Tabletcomputer oder Smartphone zu einem sehr hochwertigen und multifunktionalen Bedienhandgerät erweitert werden, welches selbst für komplexe und aufwendige Programmier-, Analyse- und Servicearbeiten bestens geeignet ist. Im separaten Betrieb des mobile Endgeräts, wie der Tabletcomputer, also losgelöst vom Roboter-Bedienhandgerät, ist dieses mobile Endgerät portabel und kann ortsungebunden, z.B. am Arbeitsplatz, im Büro oder in einem Besprechungsraum einzeln oder beispielsweise mit Anbindung an externe Bildschirme oder externe Eingabegeräte dazu genutzt werden, Arbeitsschritte oder Programme für den Roboter offline vorzubereiten, gesammelte Daten auszuwerten und/oder Statusmeldungen bzw. Zustände eines oder mehrerer Roboter per Fernwartung abzufragen. Des Weiteren kann in diesem Fall das mobile Endgerät als ein nutzergebundenes, persönliches Eingabegerät des Roboter-Bedienhandgeräts verwendet werden. Dies hat Vorteile, das beispielsweise mehrere Personen in unterschiedlichen Rollen an demselben Roboter arbeiten können, wobei die für die jeweilige Person optimale Konfiguration, z.B. bezüglich der Softwareausstattung, der Benutzerdaten, wie Cookies, Accounts, und/oder Zugriffsrechte, auf dem mobilen Endgerät individuell zusammengestellt sein kann bzw. später wieder vorgefunden werden kann.

Die erfindungsgemäße Aufgabe wird außerdem gelöst durch ein Verfahren zum Bedienen eines Roboterbedienhandgeräts, insbesondere nach einem oder mehreren Ausführungen wie beschrieben, aufweisend eine Sicherheits-Grundsteuervorrichtung, mit einem Halter, der zum manuellen Anstecken eines elektronisch mit der Sicherheits-Grundsteuervorrichtung kommunizierenden Geräts an die Sicherheits-Grundsteuervorrichtung ausgebildet ist, aufweisend den Schritt:
- Anklemmen des Geräts an den Halter des Roboterbedienhandgeräts lediglich an einem einzigen Eckbereich des Geräts.

Eine Weiterbildung des erfindungsgemäßen Verfahrens umfasst den Schritt:
- automatisches und/oder manuelles Freischalten des geklemmten Geräts derart, dass ein Roboterarm oder eine fahrbare Roboterplattform durch Betätigen von Eingabemitteln des Geräts angesteuert werden kann, wenn die Sicherheits-Grundsteuervorrichtung an das Gerät angeschlossen ist und/oder eine elektronische Kommunikation zwischen der Sicherheits-Grundsteuervorrichtung und dem Gerät eingerichtet ist, und das Gerät ordnungsgemäß, insbesondere sicher, an dem Roboter-Bedienhandgerät festgeklemmt ist.

Eine andere Weiterbildung des erfindungsgemäßen Verfahrens umfasst den Schritt:
- manuelles Bedienen der Sicherheits-Grundsteuervorrichtung zum Ansteuern eines Roboterarms oder einer fahrbaren Roboterplattform, wenn die Sicherheits-Grundsteuervorrichtung von dem Gerät getrennt ist und/oder eine elektronische Kommunikation zwischen der Sicherheits-Grundsteuervorrichtung und dem Gerät unterbrochen ist, insbesondere keine ausreichende Klemmung zwischen dem Roboterbedienhandgerät und dem Gerät vorhanden ist.

Mehrere konkrete Ausführungsbeispiele der Erfindung sind in der nachfolgenden Beschreibung unter Bezugnahme auf die beigefügten Figuren näher erläutert.

Es zeigen:
- Fig. 1: eine schematische Darstellung eines Roboters aufweisend einen Roboterarm und eine Robotersteuerung, sowie ein erfindungsgemäßes Roboter-Bedienhandgerät,
- Fig. 2: eine perspektivische Darstellung einer speziellen Ausführungsform des Roboter-Bedienhandgeräts in Alleinstellung,
- Fig. 3: eine perspektivische Darstellung des RoboterBedienhandgeräts gemäß Fig. 2 von hinten,
- Fig. 4: eine Seitenansicht des Roboter-Bedienhandgeräts gemäß Fig. 2,
- Fig. 5: eine perspektivische Darstellung des Roboter-Bedienhandgeräts gemäß Fig. 2 von unten,
- Fig. 6: eine Darstellung eines Systems von Roboter-Bedienhandgerät und einem an das Roboter-Bedienhandgerät angesetzten Gerät in Gestalt eines mobilen Endgeräts in Art eines Tablet-Computers,
- Fig. 7-10: verschiedene schematische perspektivische Darstellungen von Andruckplatten und deren Verstellbarkeit an dem Roboter-Bedienhandgerät,
- Fig. 11-12: verschiedene schematische perspektivische Darstellungen von Klemmprofilen des Roboter-Bedienhandgeräts,
- Fig. 13: eine schematische perspektivische Darstellung eines Kombination von Klemmprofilen mit einer verstellbar gelagerten Andruckplatte,
- Fig. 14: eine schematische perspektivische Darstellung mit schenkbar gelagerten Andruckplatten,
- Fig. 15: eine schematische perspektivische Darstellung mit einem Hohlkammer-Klemmprofil, das mittels eines Fluids expandierbar ist,
- Fig. 16-18: verschiedene schematische, beispielshafte Varianten von Halteanordnungen zwischen dem Roboter-Bedienhandgerät und unterschiedlichen Geräten, und
- Fig. 19-20: zwei beispielshafte Varianten von manuellen Betätigungsmitteln, die in dem handgriffartigen Griffabschnitt des Roboter-Bedienhandgeräts angeordnet sind.

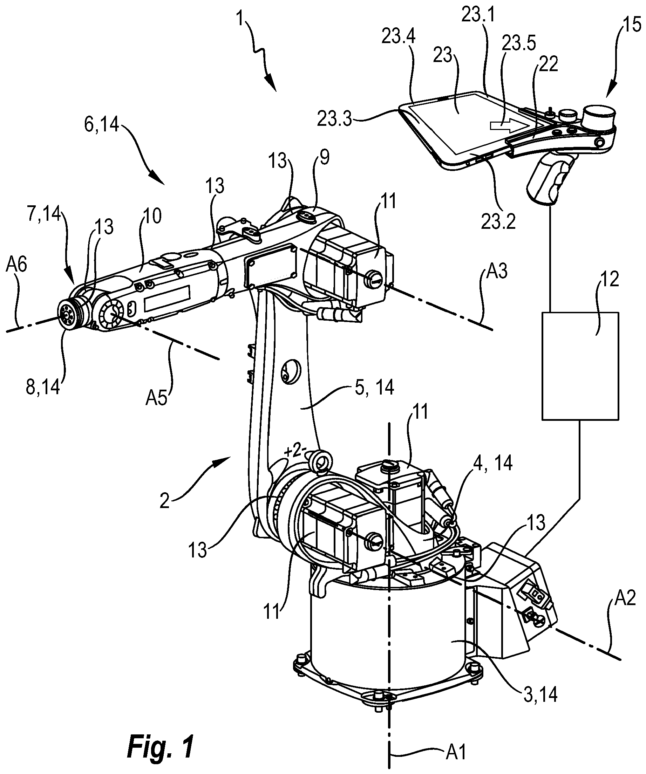

Die Fig. 1 zeigt einen Roboter 1, der einen Roboterarm 2 und eine Robotersteuerung 12 aufweist. Der Roboterarm 2 umfasst im Falle des vorliegenden Ausführungsbeispiels mehrere, nacheinander angeordnete und mittels Gelenke 13 verbundene Glieder 14. Bei den Gliedern 14 handelt es sich insbesondere um ein Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Armausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6.

Der Armausleger 6 weist im Falle des vorliegenden Ausführungsbeispiels ein schwenkbar an der Schwinge 5 gelagertes Armgehäuse 9 auf. An dem Armgehäuse 9 ist ein Handgrundgehäuse 10 des Armauslegers 6 um die Achse A4 drehbar gelagert.

Der Roboterarm 2 ist mittels dreier elektrischer Antriebsmotoren 11 in seinen drei Grundachsen und mittels dreier weiterer elektrischer Antriebsmotoren 11 in seinen drei Handachsen beweglich.

Die Robotersteuerung 12 des Roboters 1 ist ausgebildet bzw. eingerichtet, ein Roboterprogramm auszuführen, durch welches die Gelenke 14 des Roboterarms 2 gemäß des Roboterprogramms automatisiert oder in einem Handfahrbetrieb automatisch verstellt bzw. drehbewegt werden können. Dazu ist die Robotersteuerung 12 mit den ansteuerbaren elektrischen Antriebsmotoren 11 verbunden, die ausgebildet sind, die Gelenke 14 des Roboterarms 2 zu verstellen. Mit der Robotersteuerung 12 ist ein erfindungsgemäßes Roboter-Bedienhandgerät 15 steuerungstechnisch verbunden.

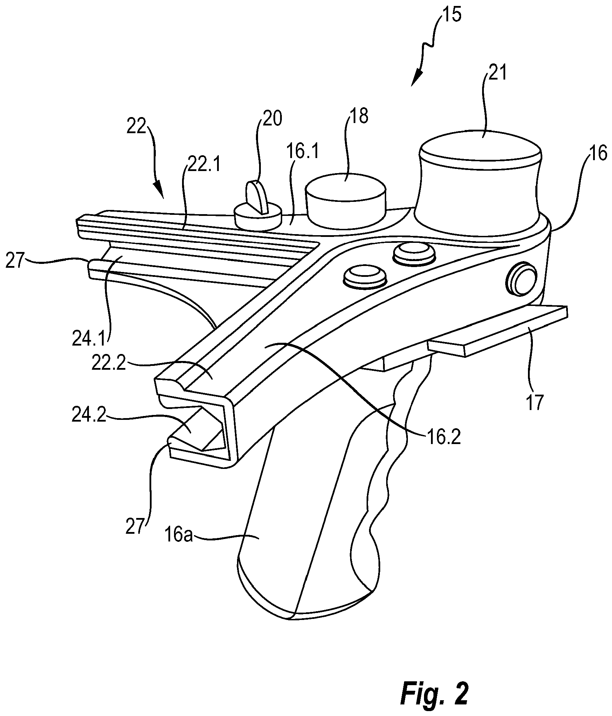

In der Fig. 2 ist das Roboter-Bedienhandgerät 15 gezeigt. Das Roboter-Bedienhandgerät 15 weist ein Gehäuse 16 und eine innerhalb des Gehäuses 16 angeordnete Sicherheits-Grundsteuervorrichtung 17 auf. Das Gehäuse 16 umfasst einen handgriffartigen Griffabschnitt 16a. Die Sicherheits-Grundsteuervorrichtung 17 kann eine elektronische Platine umfassen, die mit Eingabe- und/oder Ausgabemittel elektrisch verbunden ist.

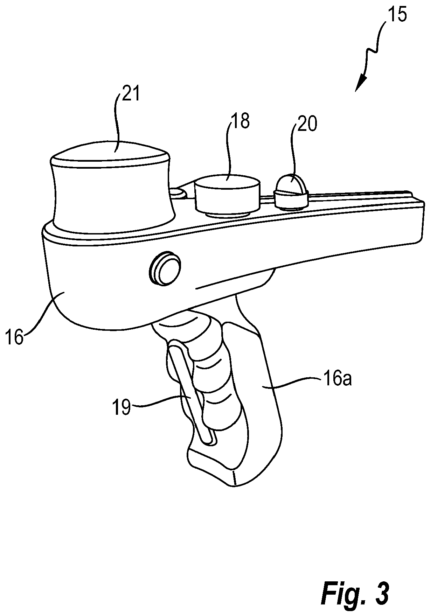

Die Sicherheits-Grundsteuervorrichtung 17 kann als Eingabe- und/oder Ausgabemittel wenigstens ein Nothalt-Auslösemittel 18, wenigstens eine Zustimmungseinrichtung 19 (Fig. 3), wenigstens ein Betriebsartauswahlmittel 20, wenigstens eine 3D/6D-Maus 21 bzw. einen Joystick und/oder wenigstens ein Anzeigemittel, insbesondere wenigstens ein elektronisches Display aufweisen.

Das Roboter-Bedienhandgerät 15 weist einen Halter 22 auf, der zum manuell lösbaren mechanischen Ankoppeln des Gehäuses 16 an ein vom Roboter-Bedienhandgerät 15 verschiedenes, mit der Sicherheits-Grundsteuervorrichtung 17 elektronisch kommunizierendes Gerät 23 ausgebildet ist. Der Halter 22 weist einen ersten Haltearm 22.1 auf, der zum mechanischen Verbinden des Roboter-Bedienhandgeräts 15 mit einem ersten Randabschnitt 23.1 des Geräts unter Freilassen eines gegenüberliegenden Randabschnitts 23.3 des Geräts 23 ausgebildet ist. Der Halter 22 weist außerdem einen zweiten Haltearm 22.2 auf, der zum mechanischen Verbinden des Roboter- Bedienhandgeräts 15 mit einem zweiten Randabschnitt 23.2 des Geräts 23, der an den ersten Randabschnitt 23.1 unter Bildung eines Eckabschnitts 24 des Geräts 23 anschließt, unter Freilassen eines dem zweiten Randabschnitt 23.2 gegenüberliegenden Randabschnitt 23.4 des Geräts 23, ausgebildet ist.

Wie insbesondere in Fig. 2 gezeigt ist, weist der erste Haltearm 22.1 eine erste nutförmige Aufnahme 24.1 auf, die zum Umgreifen des ersten Randabschnitts 23.1 des Geräts 23 ausgebildet ist. Auch der zweite Haltearm 22.2 weist eine zweite nutförmige Aufnahme 24.2 auf, die zum Umgreifen des zweiten Randabschnitts 23.2 des Geräts 23 ausgebildet ist. Die zweite nutförmige Aufnahme 24.2 ist dabei mit ihrer Längserstreckung in einem rechten Winkel zur ersten nutförmigen Aufnahme 24.1 angeordnet.

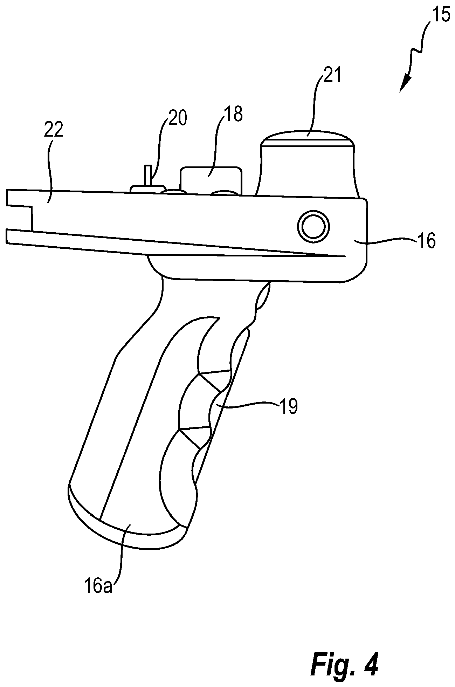

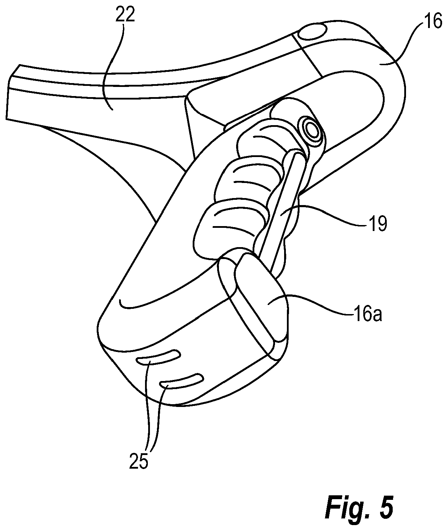

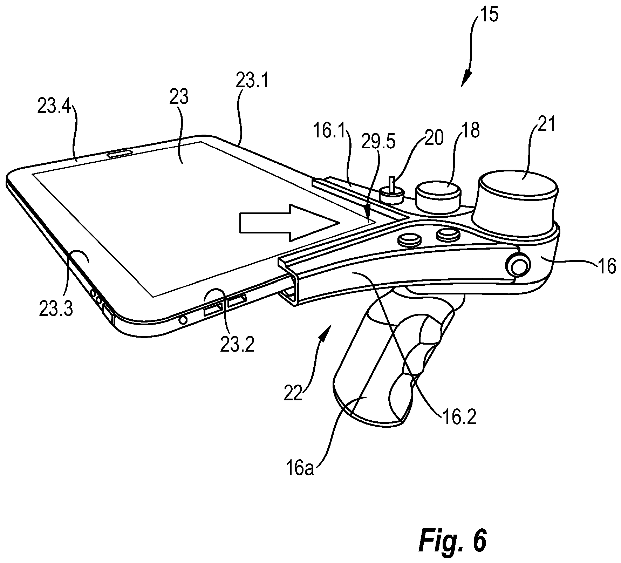

In der in den Figuren 2 bis 6 dargestellten Ausführungsform weist das Gehäuse 16 des Roboter-Bedienhandgeräts 15 einen ersten Gehäuseschenkel 16.1 auf, an dem der erste Haltearm 22.1 angeordnet ist. In dieser Ausführungsform weist das Gehäuse 16 des Roboter-Bedienhandgeräts 15 außerdem einen zweiten Gehäuseschenkel 16.2 auf, an dem der zweite Haltearm 22.2 angeordnet ist. Der erste Gehäuseschenkel 16.1 und der zweite Gehäuseschenkel 16.2 spannen dabei eine Ebene des Gehäuses 16 auf, die sich parallel zu einer Hauptebene des gehaltenen Gerätes 23 (Fig. 1 und Fig. 6) erstreckt und von der sich der handgriffartige Griffabschnitt 16a des Roboter- Bedienhandgeräts 15 nach unten, insbesondere senkrecht zur Ebene wegerstreckt. Wie in Fig. 5 dargestellt, kann an einer Unterseite des handgriffartigen Griffabschnitts 16a das Roboter-Bedienhandgerät 15 elektrische Anschlüsse 25 aufweisen. Die elektrischen Anschlüsse 25 können beispielsweise Ladekontakte sein, über die eine interne Batterie bzw. ein interner Akku des Roboter-Bedienhandgeräts 15 von einer externen elektrischen Energiequelle aufgeladen werden kann. Die elektrischen Anschlüsse 25 können aber auch Kontakte einer Signalleitung sein, welche eine drahtgebundene elektronische Kommunikation des Roboter-Bedienhandgeräts 15 mit einem externen Gerät ermöglicht.

In der in den Figuren 2 bis 6 dargestellten Ausführungsform werden der erste Haltearm 22.1 und der zweite Halterarm 22.2, insbesondere die erste nutförmige Aufnahme 24.1 und die zweite nutförmige Aufnahme 24.2 von einem im Querschnitt U-förmigen Haltewinkel gebildet. In den U-förmigen Haltewinkel ist in diesem Fall jeweils ein Klemmprofil 27 eingefügt.

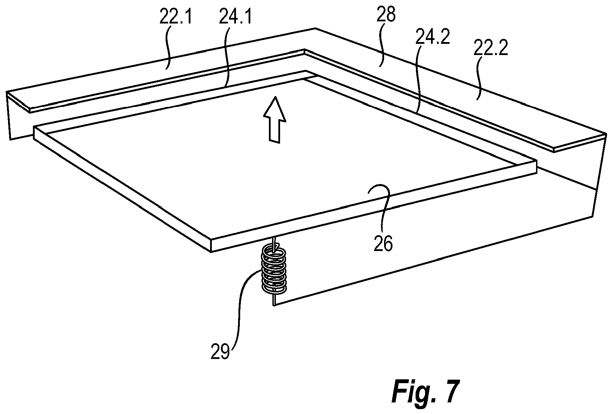

Die Fig. 7 zeigt schematisch eine andere Ausführungsform eines Halters 22. Der erste Haltearm 22.1 und der zweite Halterarm 22.2, insbesondere die erste nutförmige Aufnahme 24.1 und die zweite nutförmige Aufnahme 24.2 werden in dieser Ausführungsform von einem im Querschnitt L-förmigen Haltewinkel 28 und einer relativ zum Haltewinkel 28 verstellbar gelagerten Andruckplatte 26 gebildet.

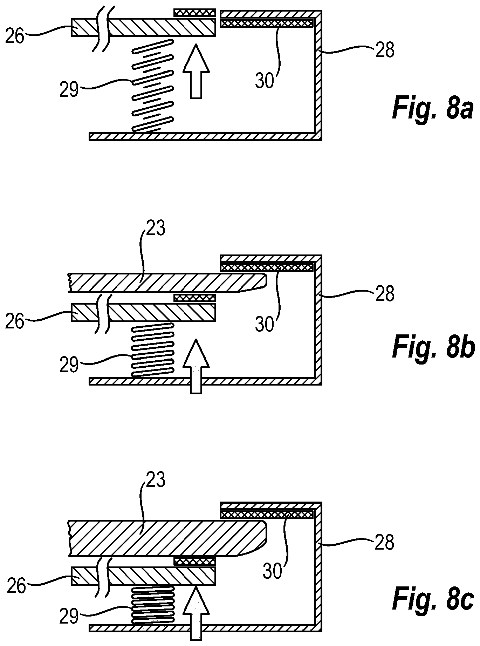

Die Andruckplatte 26 ist aus einer Grundstellung (Fig. 8a) heraus federkraftrückstellend (Feder 29) in eine Aufnahmestellung (Fig. 8b, Fig. 8c) verstellbar gelagert, in welcher die beiden winkelig aneinanderstoßenden Randabschnitte des Geräts 23 bei an das Roboter-Bedienhandgerät 15 angesetztem Gerät 23 (Fig. 8b, Fig. 8c) von dem ersten Haltearm 22.1 und dem zweiten Halterarm 22.2, insbesondere der ersten nutförmigen Aufnahme 24.1 und der zweiten nutförmigen Aufnahme 24.1 formschlüssig und/oder kraftschlüssig aufgenommen sind.

Der erste Haltearm 22.1 und der zweite Halterarm 22.2, insbesondere die erste nutförmige Aufnahme 24.1 und die zweite nutförmige Aufnahme 24.2 weisen eine Anschlagsfläche 30 auf, die zum Anliegen einer Vorderseite des Geräts 23 in einer Aufnahmeanordnung (Fig. 8b, Fig. 8c) des Geräts 23 an dem Roboter-Bedienhandgerät 15 ausgebildet ist, und die Andruckplatte 26 zum Anliegen an einer Rückseite des Geräts 23 ausgebildet ist, wobei die Andruckplatte 26 zur Aufnahme unterschiedlich dicker Geräte (Fig. 8b, Fig. 8c) relativ zur Anschlagsfläche 30 verstellbar gelagert ist. Die Andruckplatte 30 ist im dargestellten Ausführungsbeispiel der Fig. 7 und Fig. 8a bis Fig. 8c relativ zur Anschlagsfläche 30 linear verstellbar gelagert.

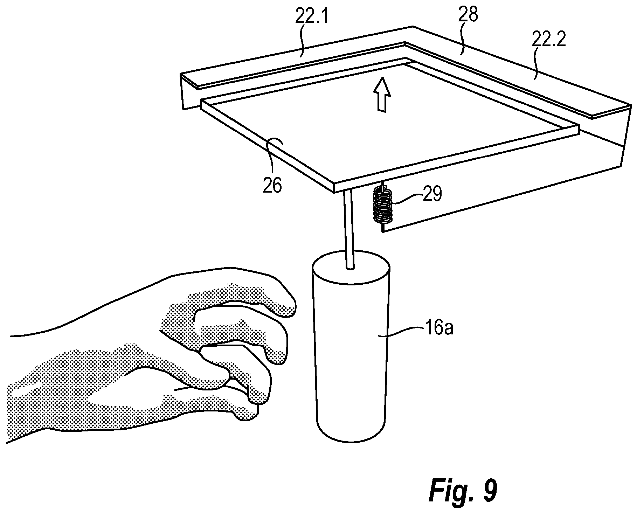

In einer Variante ist dabei die verstellbare Andruckplatte 26 zusammen mit dem handgriffartigen Griffabschnitt 16a linear verstellbar gelagert, wie dies in Fig. 9 schematisch gezeigt ist.

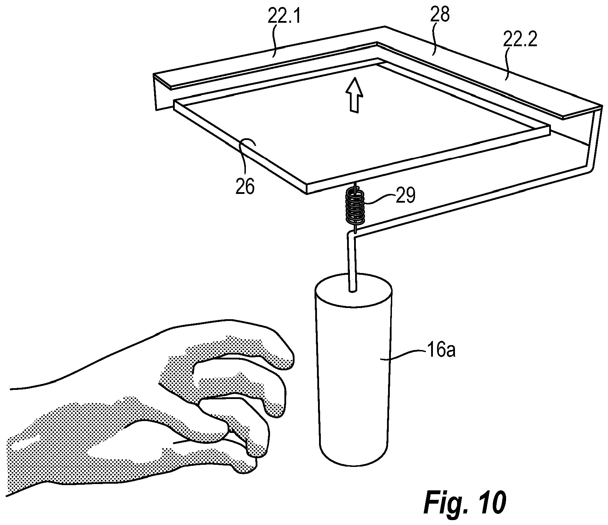

In einer anderen Variante ist die verstellbare Andruckplatte 26 relativ zur Anschlagsfläche 30 und relativ zum handgriffartigen Griffabschnitt 16a linear verstellbar gelagert, insbesondere der handgriffartige Griffabschnitt 16a bezüglich der Anschlagsfläche 30 starr befestigt, wie dies in Fig. 10 schematisch gezeigt ist.

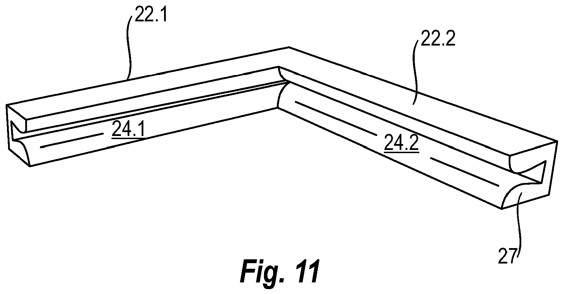

In der Fig. 11 ist schematisch gezeigt, wie der erste Haltearm 22.1 und der zweite Halterarm 22.2, insbesondere die erste nutförmige Aufnahme 24.1 und die zweite nutförmige Aufnahme 24.2 ein Klemmprofil 27 aus elastischem Material aufweisen.

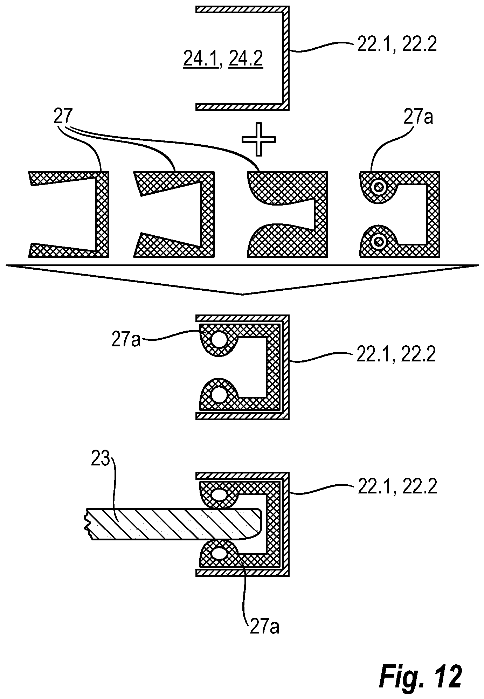

Die Fig. 12 zeigt schematisch, wie verschieden gestaltete Klemmprofile 27 oder auch ein Hohlkammerprofil 27a aus elastischem Material in die erste nutförmige Aufnahme 24.1 bzw. die zweite nutförmige Aufnahme 24.2 eingesetzt und auch wieder herausgenommen werden kann. So können unterschiedliche Klemmprofile 27 oder Hohlkammerprofile 27a in Abhängigkeit des jeweils zum Einsetzen ausgewählten Geräts 23 verwendet werden.

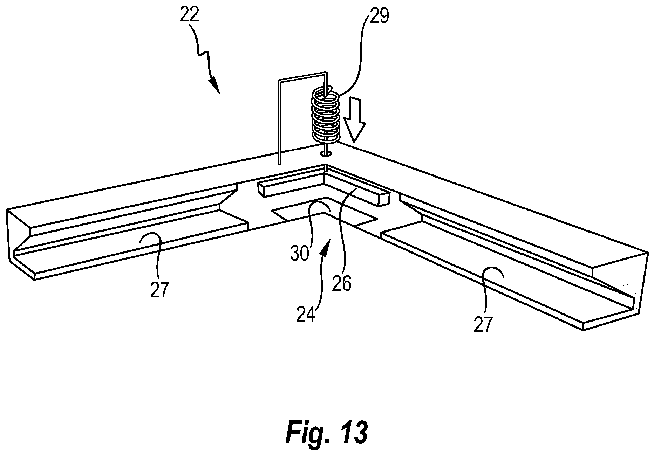

Die Fig. 13 zeigt eine Ausführungsvariante, bei der Klemmprofile 27 mit einer Andruckplatte 26 und einer Anschlagsfläche 30 im Eckabschnitt 24 des Halters 22 kombiniert Verwendung findet, bei welcher die Andruckplatte 26 durch eine Feder 29 in eine Klemmstellung federvorgespannt ist.

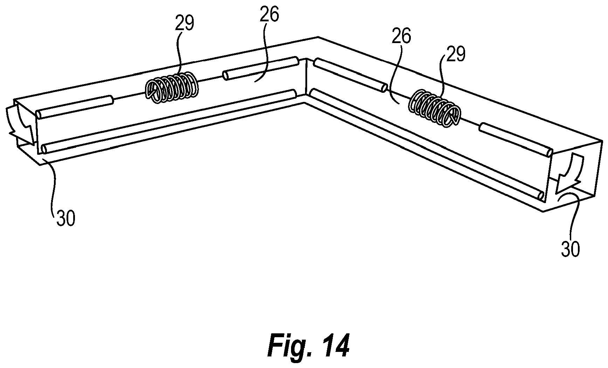

Die Fig. 14 zeigt eine Ausführungsvariante, bei der die Andruckplatte 26 relativ zur Anschlagsfläche 30 schwenkbar gelagert ist. Die beiden Federn 29 sind als Drehfedern ausgeführt und schwenken die Andruckplatten 26 gegen die Anschlagsflächen 30.

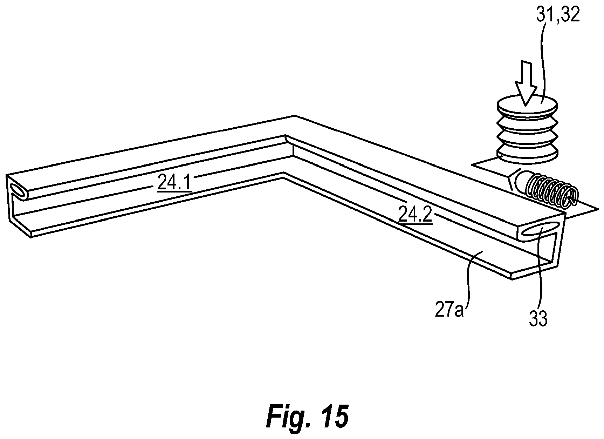

Die Fig. 15 zeigt eine Variante, bei der ein Hohlkammerprofil 27a mittels eines Fluids, insbesondere Druckluft zur Erzeugung einer Klemmkraft expandierbar ist.

Gemäß einer solchen Variante kann das Roboter-Bedienhandgerät 15 über einen Fluidbehälter 31 verfügen und/oder eine Fluidpumpe 32 aufweisen. Mittels der Fluidpumpe 32 kann das Fluid in wenigstens eine Hohlkammer 33 des Hohlkammerprofil 27a gepumpt werden, so dass sich das Hohlkammerprofil 27a vergrößern kann, wodurch die erste nutförmige Aufnahme 24.1 bzw. die zweite nutförmige Aufnahme 24.2 verengt werden kann.

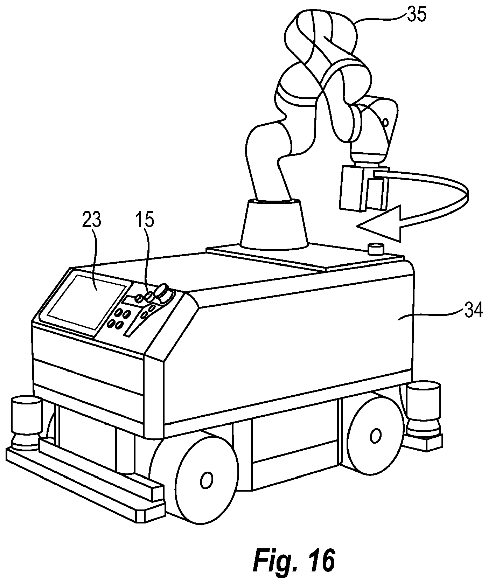

Die Fig. 16 zeigt eine fahrbare Roboterplattform 34 auf der ein Roboterarm 35 befestigt ist. Mittels eines Halters kann sowohl ein erfindungsgemäßes Roboter-Bedienhandgerät 15, als auch ein Gerät 23 an der fahrbaren Roboterplattform 34 manuell entnehmbar gehalten sein.

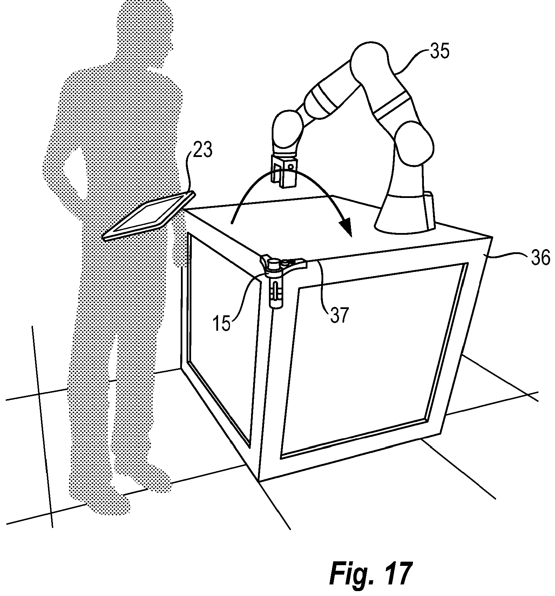

Die Fig. 17 zeigt einen Steuerungssockel 36 auf der ein Roboterarm 35 befestigt ist. Mittels eines Halters kann ein erfindungsgemäßes Roboter-Bedienhandgerät 15 an dem Steuerungssockel 36 manuell entnehmbar gehalten sein. Dazu kann der Steuerungssockel 36 einen tischkantenartigen Rand 37 aufweisen, an den ein erfindungsgemäßes Roboter-Bedienhandgerät 15 mit seinem erfindungsgemäßen Halter 22 wie beschrieben und beansprucht, angeklemmt werden kann.

Wird das erfindungsgemäße Roboter-Bedienhandgerät 15 beispielsweise von dem Steuerungssockel 36 manuell entnommen und als separates Roboter-Bedienhandgerät 15 in der Hand eines Benutzers gehalten, so bildet das separat gehaltene Roboter-Bedienhandgerät 15 eine autarke 6D-Maus, mittels welcher der Benutzer durch Bewegen und/oder Drehen der Hand bzw. seines Handgelenks der Roboterarm 35 oder auch die fahrbare Roboterplattform 34 direkt handgeführt werden kann. Beispielsweise können dazu die Positionen und/oder Orientierungen eines Bezugspunktes, insbesondere TCPs des Roboterarms 35 bzw. der fahrbare Roboterplattform 34 an die Positionen und/oder Orientierungen des in der Hand gehaltenen Roboter-Bedienhandgeräts 15 gekoppelt sein. Eine Bewegung der Hand, bzw. eine Bewegung des in der Hand gehaltenen Roboter-Bedienhandgeräts 15 verursacht dabei direkt eine entsprechende gleichartige Bewegung des Roboterarms 35 oder der fahrbaren Roboterplattform 34.

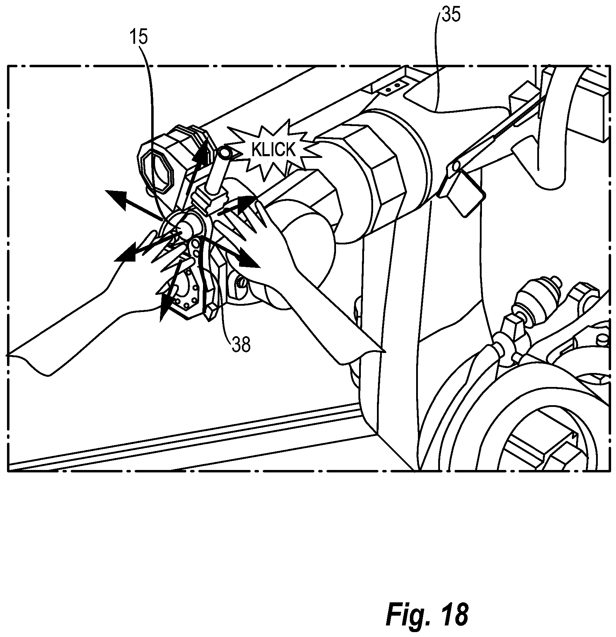

Die Fig. 18 zeigt einen Roboterarm 35. Mittels des Halters 22 kann ein erfindungsgemäßes Roboter-Bedienhandgerät 15 beispielsweise auch an einem Flansch 38 des Roboterarms 35 manuell entnehmbar befestigt werden. Dazu kann der Flansch 38 eine Kante aufweisen, an die ein erfindungsgemäßes Roboter-Bedienhandgerät 15 mit seinem erfindungsgemäßen Halter 22 wie beschrieben und beansprucht, angeklemmt werden kann. In einer angeklemmten Anordnung des Roboter-Bedienhandgeräts 15 an dem Flansch 38 kann dann der Roboterarm 35 beispielsweise manuell geführt und dessen Gelenke durch manuelles Führen des Roboter-Bedienhandgeräts 15 verstellt werden.

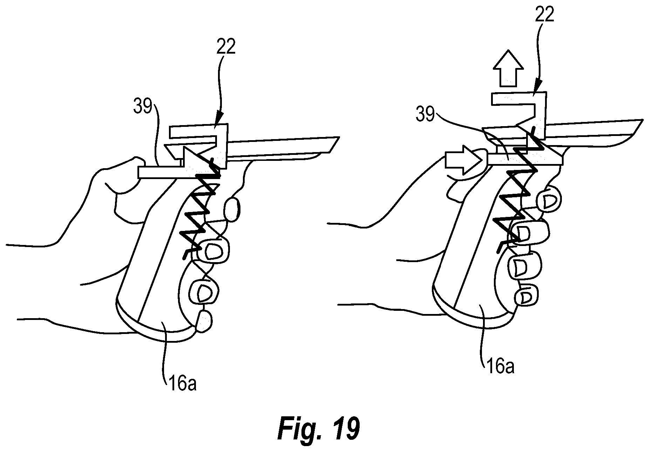

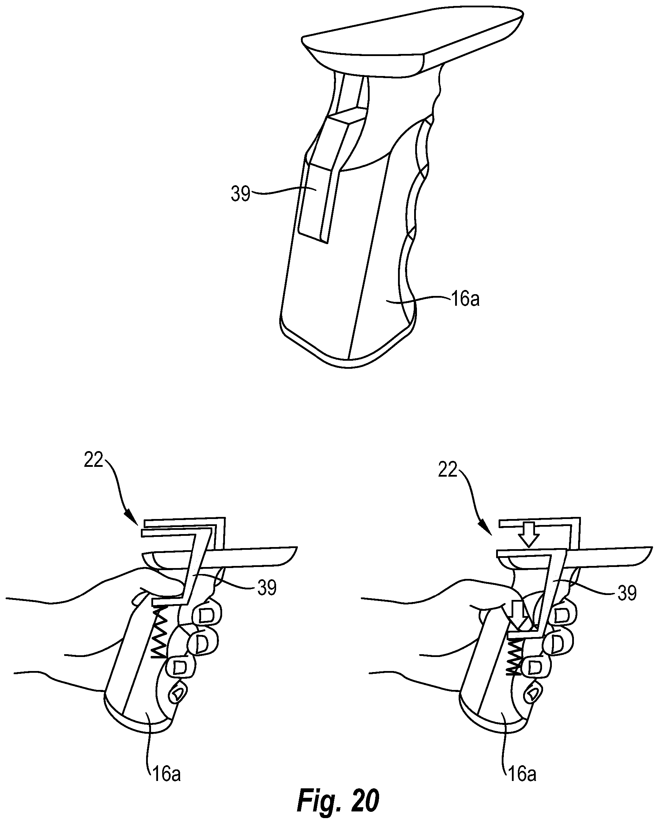

Die Fig. 19 und die Fig. 20 zeigen zwei Varianten von Roboter-Bedienhandgeräten 15, die jeweils ein am handgriffartigen Griffabschnitt 16a angeordnetes Betätigungsmittel 39 aufweisen, das ausgebildet ist, in einer Verriegelungsstellung des Betätigungsmittels 39 den Halter 22 in einer Klemmstellung zu halten und in einer Entriegelungsstellung des Betätigungsmittels 39 den Halter 22 aus seiner Klemmstellung freizugeben.

Eine Paarbildung (Pairing) des Roboter-Bedienhandgeräts 15 mit dem Gerät 23 kann beispielsweise über dem Fachmann als solches bekannte NFC- und/oder RFID-Technologien durch einfaches Zusammenhalten und/oder Zusammenstecken der Partner erfolgen.

Ein Betätigungsmittel, bzw. ein Auslösetaster, wie das Verriegelungsmittel 39 kann insbesondere am Griff integriert werden, kann jedoch beispielsweise auch separat auf der Ecke des Geräts 23 liegen und kann somit absichtlich räumlich vom Griff getrennt angeordnet sein. So ist eine bewusste Auslösehandlung mit einer anderen als der Haltehand erforderlich und gewünscht. Dabei kann das Betätigungsmittel in Kombination mit seiner speziell geformten Umgebung auch gleich als Griff zum einhändigen Halten bei der Kopplung dienen.

Durch eine spezielle Formgebung des zweiten Schenkels 16.2 kann dieser auch gegriffen werden. Ein bspw. darunter liegender zweiter Zustimmtaster kann dadurch auch eine zweite Haltevariante ermöglichen. Die rechte Hand umgreift dabei den Schenkel 16.2, die linke Hand umgreift den linken Rand des Tablets. Dadurch kann die Halteposition des Geräts 23 auch nach Belieben, insbesondere nach ergonomischer Hinsicht, verändert werden.

Beim Halten des Roboter-Bedienhandgeräts 15 kann die Handoberseite auf der Unterseite der Mittelplatte aufliegen. Dies ermöglicht ein entspanntes Halten. Ist ein Tablet-PC integriert, liegt dieses mit der dem Roboter-Bedienhandgerät 15 abgewandten Ecke/ Unterseite auf dem Unterarm des Nutzers auf. Dies ermöglicht ein entspanntes Halten mit dem Tablet.

## Patentansprüche

1. Roboter-Bedienhandgerät, aufweisend ein Gehäuse (16), das einen handgriffartigen Griffabschnitt (16a) aufweist, eine im Gehäuse (16) angeordnete Sicherheits-Grundsteuervorrichtung (17) und wenigstens einen mit dem Gehäuse (16) verbundenen Halter (22), der zum manuell lösbaren mechanischen Ankoppeln des Gehäuses (16) an ein vom Roboter-Bedienhandgerät (15) verschiedenes, mit der Sicherheits-Grundsteuervorrichtung (17) elektronisch kommunizierendes Gerät (23) ausgebildet ist, wobei der Halter (22) einen ersten Haltearm (22.1) aufweist, der zum mechanischen Verbinden des Roboter-Bedienhandgeräts (15) mit einem ersten Randabschnitt (23.1) des Geräts (23) unter Freilassen eines gegenüberliegenden Randabschnitts (23.3) des Geräts (23) ausgebildet ist und einen zweiten Haltearm (22.2) aufweist, der zum mechanischen Verbinden des Roboter-Bedienhandgeräts (15) mit einem zweiten Randabschnitt (23.2) des Geräts (23), der an den ersten Randabschnitt (23.1) unter Bildung eines Eckabschnitts (23.5) des Geräts (23) anschließt, unter Freilassen eines dem zweiten Randabschnitt (23.2) gegenüberliegenden Randabschnitts (23.4) des Geräts (23), ausgebildet ist, wobei das Gehäuse (16) einen ersten Gehäuseschenkel (16.1) aufweist, an dem der erste Haltearm (22.1) angeordnet ist, einen zweiten Gehäuseschenkel (16.2) aufweist, an dem der zweite Haltearm (22.2) angeordnet ist, wobei der erste Gehäuseschenkel (16.1) und der zweite Gehäuseschenkel (16.2) eine Ebene des Gehäuses (16) aufspannen, die sich parallel zu einer Hauptebene des gehaltenen Gerätes (23) erstreckt **dadurch kennzeichnet, dass** sich von dieser Ebene des Gehäuses (16) der handgriffartige Griffabschnitt (16a) des Roboter-Bedienhandgeräts (15) nach unten wegerstreckt.

2. Roboter-Bedienhandgerät nach Anspruch 1, bei dem der erste Haltearm (22.1) eine erste nutförmige Aufnahme (24.1) aufweist, die zum Umgreifen des ersten Randabschnitts (23.1) des Geräts (23) ausgebildet ist und der zweite Haltearm (22.2) eine zweite nutförmige Aufnahme (24.2) aufweist, die zum Umgreifen des zweiten Randabschnitts (23.2) des Geräts (23) ausgebildet ist, wobei die zweite nutförmige Aufnahme (24.2) mit ihrer Längserstreckung in einem rechten Winkel zur ersten nutförmigen Aufnahme (24.1) angeordnet ist.

3. Roboter-Bedienhandgerät nach Anspruch 1 oder 2, bei dem sich der handgriffartige Griffabschnitt (16a) des Roboter-Bedienhandgeräts (15) senkrecht zur Ebene des Gehäuses (16) nach unten wegerstreckt.

4. Roboter-Bedienhandgerät nach einem der Ansprüche 1 bis 3, bei dem der erste Haltearm (22.1) und der zweite Halterarm (22.2), insbesondere die erste nutförmige Aufnahme (24.1) und die zweite nutförmige Aufnahme (24.2) von einem im Querschnitt L-förmigen oder U-förmigen Haltewinkel (28) und einer relativ zum Haltewinkel (28) verstellbar gelagerten Andruckplatte (26) gebildet werden.

5. Roboter-Bedienhandgerät nach Anspruch 4, bei dem die Andruckplatte (26) aus einer Grundstellung heraus federkraftrückstellend in eine Aufnahmestellung verstellbar gelagert ist, in welcher die beiden winkelig aneinanderstoßenden Randabschnitte (23.1, 23.2) des Geräts (23) bei an das Roboter-Bedienhandgerät (15) angesetztem Gerät (23) von dem ersten Haltearm (22.1) und dem zweiten Halterarm (22.2), insbesondere der ersten nutförmigen Aufnahme (24.1) und der zweiten nutförmigen Aufnahme (24.2) formschlüssig und/oder kraftschlüssig aufgenommen sind.

6. Roboter-Bedienhandgerät nach Anspruch 4 oder 5, bei dem der erste Haltearm (22.1) und der zweite Halterarm (22.2), insbesondere die erste nutförmige Aufnahme (24.1) und die zweite nutförmige Aufnahme (24.2) eine Anschlagsfläche (30) aufweisen, die zum Anliegen einer Vorderseite des Geräts (23) in einer Aufnahmeanordnung des Geräts (23) an dem Roboter-Bedienhandgerät (15) ausgebildet ist, und die Andruckplatte (26) zum Anliegen an einer Rückseite des Geräts (23) ausgebildet ist, wobei die Andruckplatte (26) zur Aufnahme unterschiedlich dicker Geräte (23) relativ zur Anschlagsfläche (30) verstellbar gelagert ist.

7. Roboter-Bedienhandgerät nach Anspruch 6, bei dem die Andruckplatte (26) relativ zur Anschlagsfläche (30) linear verstellbar gelagert ist.

8. Roboter-Bedienhandgerät nach Anspruch 7, bei dem die verstellbare Andruckplatte (26) zusammen mit dem handgriffartigen Griffabschnitt (16a) linear verstellbar gelagert ist.

9. Roboter-Bedienhandgerät nach Anspruch 7, bei dem die verstellbare Andruckplatte (26) relativ zur Anschlagsfläche (30) und relativ zum handgriffartigen Griffabschnitt (16a) linear verstellbar gelagert ist, insbesondere der handgriffartige Griffabschnitt (16a) bezüglich der Anschlagsfläche (30) starr befestigt ist.

10. Roboter-Bedienhandgerät nach Anspruch 6, bei dem die Andruckplatte (26) relativ zur Anschlagsfläche (30) schwenkbar gelagert ist.

11. Roboter-Bedienhandgerät nach einem der Ansprüche 1 bis 10, bei dem der erste Haltearm (22.1) und der zweite Halterarm (22.2), insbesondere die erste nutförmige Aufnahme (24.1) und die zweite nutförmige Aufnahme (24.2) ein Klemmprofil (27) aus elastischem Material, insbesondere ein Hohlkammerprofil (27a) aus elastischem Material aufweisen.

12. Roboter-Bedienhandgerät nach Anspruch 11, bei dem das Klemmprofil (27), insbesondere das Hohlkammerprofil (27a) mittels eines Fluids, insbesondere Druckluft zur Erzeugung einer Klemmkraft expandierbar ist.

13. Roboter-Bedienhandgerät nach einem der Ansprüche 1 bis 12, bei dem die Sicherheits-Grundsteuervorrichtung (17) wenigstens ein Nothalt-Auslösemittel (18), wenigstens eine Zustimmungseinrichtung (19), wenigstens ein Betriebsartauswahlmittel (20), wenigstens eine 3d/6D-Maus (21) und/oder wenigstens ein Anzeigemittel, insbesondere wenigstens ein elektronisches Display aufweist.

14. Roboter-Bedienhandgerät nach einem der Ansprüche 1 bis 13, aufweisend einen Halter, insbesondere einen Halter (22) nach einem der Ansprüche 1 bis 13, der zum Befestigen des Roboter-Bedienhandgerät (15) an einem Gerät (23), insbesondere einem Roboterarm (35), einem Steuerungssockel (36), einer fahrbare Roboterplattform (34), und/oder eines mobilen Endgeräts, insbesondere eines Tablet-Computers ausgebildet ist.

15. Roboter-Bedienhandgerät nach einem der Ansprüche 1 bis 14, aufweisend ein manuelles Betätigungsmittel (39), insbesondere ein am handgriffartigen Griffabschnitt (16a) angeordnetes Betätigungsmittel (39), das ausgebildet ist, in einer Verriegelungsstellung des Betätigungsmittels (39) den Halter (22) in einer Klemmstellung zu halten und in einer Entriegelungsstellung des Betätigungsmittels (39) den Halter (22) aus seiner Klemmstellung freizugeben.

16. Verfahren zum Bedienen eines Roboterbedienhandgeräts, nach einem der Ansprüche 1 bis 15, aufweisend eine Sicherheits-Grundsteuervorrichtung (17), mit einem Halter (22), der zum manuellen Anstecken eines elektronisch mit der Sicherheits-Grundsteuervorrichtung (17) kommunizierenden Geräts (23) an die Sicherheits-Grundsteuervorrichtung (17) ausgebildet ist, **gekennzeichnet durch** den Schritt:
- Anklemmen des Geräts (23) an den Halter (22) des Roboterbedienhandgeräts (15) lediglich an einem einzigen Eckbereich des Geräts (23).

17. Verfahren nach Anspruch 16, **gekennzeichnet durch** den Schritt:
- automatisches und/oder manuelles Freischalten des geklemmten Geräts (23) derart, dass ein Roboterarm (35) oder eine fahrbare Roboterplattform (34) **durch** Betätigen von Eingabemitteln des Geräts (23) angesteuert werden kann, wenn die Sicherheits-Grundsteuervorrichtung (17) an das Gerät (23) angeschlossen ist und/oder eine elektronische Kommunikation zwischen der Sicherheits-Grundsteuervorrichtung (17) und dem Gerät (23) eingerichtet ist, und das Gerät (23) ordnungsgemäß, insbesondere sicher, an dem Roboter-Bedienhandgerät (15) festgeklemmt ist.

18. Verfahren nach Anspruch 16, **gekennzeichnet durch** den Schritt:
- manuelles Bedienen der Sicherheits-Grundsteuervorrichtung (17) zum Ansteuern eines Roboterarms (35) oder einer fahrbaren Roboterplattform (34), wenn die Sicherheits-Grundsteuervorrichtung (17) von dem Gerät (23) getrennt ist und/oder eine elektronische Kommunikation zwischen der Sicherheits-Grundsteuervorrichtung (17) und dem Gerät (23) unterbrochen ist, insbesondere keine ausreichende Klemmung zwischen dem Roboterbedienhandgerät (15) und dem Gerät (23) vorhanden ist.

## Claims

1. Hand-held robot control device, comprising a housing (16) having a handle-like grip portion (16a), a basic safety control device (17) disposed in the housing (16), and at least one holder (22) connected to the housing (16) and adapted for manually releasably mechanically coupling the housing (16) to a device (23) other than the hand-held robot control device (15) and electronically communicating with the basic safety control device (17), wherein the holder (22) has a first holding arm (22.1) which is adapted to mechanically connecting the hand-held robot control device (15) to a first edge portion (23.1) of the device (23) while leaving an opposite edge portion (23.3) of the device (23) free, and a second holding arm (22. 2) adapted to mechanically connect the hand-held robot control device (15) to a second edge portion (23.2) of the device (23), which is contiguous to the first edge portion (23.1) to form a corner portion (23.5) of the device (23), leaving an edge portion (23.4) of the device (23) opposite to the second edge portion (23.2) free, wherein the housing (16) comprises a first housing leg (16.1) on which the first holding arm (22.1) is arranged, and a second housing leg (16.2) on which the second holding arm (22.2) is arranged, wherein the first housing leg (16.1) and the second housing leg (16.2) span a plane of the housing (16) extending parallel to a main plane of the held device (23), **characterized in that** the handle-like grip portion (16a) of the hand-held robot control device (15) extends downwardly from this plane of the housing (16).

2. Hand-held robot control device according to claim 1, in which the first holding arm (22.1) has a first groove-shaped receptacle (24.1) which is designed to engage around the first edge portion (23.1) of the device (23) and the second holding arm (22.2) has a second groove-shaped receptacle (24.2) which is designed to engage around the second edge portion (23.2) of the device (23), the second groove-shaped receptacle (24.2) being arranged with its longitudinal extent at a right angle to the first groove-shaped receptacle (24.1).

3. Hand-held robot control device according to claim 1 or 2, in which the handle-like grip portion (16a) of the Hand-held robot control device (15) extends downwardly perpendicular to the plane of the housing (16).

4. Hand-held robot control device according to one of claims 1 to 3, in which the first holding arm (22.1) and the second holding arm (22.2), in particular the first groove-shaped receptacle (24.1) and the second groove-shaped receptacle (24.2), are formed by a retaining bracket (28) which is L-shaped or U-shaped in crosssection and a pressure plate (26) which is adjustable mounted relative to the retaining bracket (28).

5. Hand-held robot control device according to claim 4, in which the pressure plate (26) is adjustably mounted spring force returning from a basic position into a receiving position in which the two angularly abutting edge portions (23.1, 23.2) of the device (23) are positively locked and/or force-locked received by the first holding arm (22.1) and the second holding arm (22.2), in particular the first groove-shaped receptacle (24.1) and the second groove-shaped receptacle (24.2), when the device (23) is attached to the hand-held robot control device (15).

6. Hand-held robot control device according to claim 4 oder 5, in which the first holding arm (22.1) and the second holding arm (22.2), in particular the first groove-shaped receptacle (24.1) and the second groove-shaped receptacle (24. 2) have a stop surface (30) which is designed to bear against a front side of the device (23) in a receiving arrangement of the device (23) on the robot hand-held control device (15), and the pressure plate (26) is designed to bear against a rear side of the device (23), the pressure plate (26) is adjustably mounted relative to the stop surface (30) in order to receive devices (23) of different thicknesses.

7. Hand-held robot control device according to claim 6, in which the pressure plate (26) is linear adjustably mounted relative to the stop surface (30).

8. Hand-held robot control device according to claim 7, in which the adjustable pressure plate (26) is linear adjustably mounted together with the handle-like grip portion (16a) .

9. Hand-held robot control device according to claim 7, in which the adjustable pressure plate (26) is linear adjustably mounted relative to the stop surface (30) and relative to the handle-like grip portion (16a), in particular the handle-like grip portion (16a) is fixed rigidly with respect to the stop surface (30).

10. Hand-held robot control device according to claim 6, in which the pressure plate (26) is pivotably mounted relative to the stop surface (30).

11. Hand-held robot control device according to one of claims 1 to 10, in which the first holding arm (22.1) and the second holding arm (22.2), in particular the first groove-shaped receptacle (24.1) and the second groove-shaped receptacle (24.2), have a clamping profile (27) made of elastic material, in particular a hollow chamber profile (27a) made of elastic material.

12. Hand-held robot control device according to claim 11, in which the clamping profile (27), in particular the hollow chamber profile (27a), is expandable by means of a fluid, in particular compressed air, to generate a clamping force.

13. Hand-held robot control device according to one of claims 1 to 12, in which the basic safety control device (17) has at least one emergency stop release means (18), at least one enabling device (19), at least one operating mode selection means (20), at least one 3D/6D mouse (21) and/or at least one display means, in particular at least one electronic display.

14. Hand-held robot control device according to one of claims 1 to 13, comprising a holder, in particular a holder (22) according to one of claims 1 to 13, which is designed for fastening the hand-held robot control device (15) to a device (23), in particular a robot arm (35), a control base (36), a mobile robot platform (34), and/or a mobile terminal, in particular a tablet computer .

15. Hand-held robot control device according to one of claims 1 to 14, comprising a manual actuating means (39), in particular an actuating means (39) arranged on the handle-like grip portion (16a), which is designed to hold the holder (22) in a clamping position in a locking position of the actuating means (39) and to release the holder (22) from its clamping position in an unlocking position of the actuating means (39).

16. Method for operating a hand-held robot control device according to one of claims 1 to 15, comprising a basic safety control device (17) having a holder (22) adapted to manually plug a device (23) onto the basic safety control device (17) communicating electronically with the basic safety control device (17), **characterized by** the step:
- clamping the device (23) to the holder (22) of the hand-held robot control device (15) only at a single corner area of the device (23).

17. Method according to claim 16, **characterized by** the step:
- automatically and/or manually authorizing the clamped device (23) in such a way that a robot arm (35) or a mobile robot platform (34) can be controlled by actuating input means of the device (23), when the basic safety control device (17) is connected to the device (23) and/or electronic communication is established between the basic safety control device (17) and the device (23), and the device (23) is properly, in particular securely, clamped to the hand-held robot control device (15).

18. Method according to claim 16, **characterized by** the step:
- manually operating the basic safety control device (17) for controlling a robot arm (35) or a mobile robot platform (34) when the basic safety control device (17) is disconnected from the device (23) and/or an electronic communication between the basic safety control device (17) and the device (23) is interrupted, in particular if there is no sufficient clamping between the robot operating handset (15) and the device (23).

## Revendications

1. Appareil portatif de commande de robot, présentant un boîtier (16), qui présente un tronçon de préhension (16a) en forme de poignée, un dispositif de commande de base de sécurité (17) disposé dans le boîtier (16) et au moins un support (22) relié au boîtier (16), qui est réalisé pour le couplage mécanique manuellement détachable du boîtier (16) à un appareil (23) différent de l'appareil portatif de commande de robot (15) et communiquant électroniquement avec le dispositif de commande de base de sécurité (17), le support (22) présentant un premier bras de maintien (22.1), qui est réalisé pour relier mécaniquement l'appareil portatif de commande de robot (15) à un premier tronçon de bord (23.1) de l'appareil (23) en laissant libre un tronçon de bord opposé (23.3) de l'appareil (23), et un deuxième bras de maintien (22.2) qui est réalisé pour relier mécaniquement l'appareil portatif de commande de robot (15) à un deuxième tronçon de bord (23.2) de l'appareil (23), qui se raccorde au premier tronçon de bord (23.1) en formant un tronçon de coin (23.5) de l'appareil (23), en laissant libre un tronçon de bord (23.4) de l'appareil (23) opposé au deuxième tronçon de bord (23.2), le boîtier (16) présentant une première branche de boîtier (16.1), sur laquelle est agencé le premier bras de maintien (22.1), une deuxième branche de boîtier (16.2), sur laquelle est agencé le deuxième bras de maintien (22.2), la première branche de boîtier (16.1) et la deuxième branche de boîtier (16.2) définissant un plan du boîtier (16) qui s'étend parallèlement à un plan principal de l'appareil (23) maintenu, **caractérisé en ce que** le tronçon de préhension (16a) de type poignée de l'appareil portatif de commande de robot (15) s'étend vers le bas à partir de ce plan du boîtier (16).

2. Appareil portatif de commande de robot selon la revendication 1, dans lequel le premier bras de maintien (22.1) présente un premier logement en forme de rainure (24.1) qui est réalisé pour enserrer le premier tronçon de bord (23.1) de l'appareil (23) et le deuxième bras de maintien (22.2) présente un deuxième logement (24.2) en forme de rainure qui est réalisé pour entourer le deuxième tronçon de bord (23.2) de l'appareil (23). 2), qui est réalisé pour enserrer le deuxième tronçon de bord (23.2) de l'appareil (23), le deuxième logement (24.2) en forme de rainure étant agencé avec son extension longitudinale à angle droit par rapport au premier logement (24.1) en forme de rainure.

3. Appareil portatif de commande de robot selon la revendication 1 ou 2, dans lequel le tronçon de préhension (16a) de type poignée de l'appareil portatif de commande de robot (15) s'étend vers le bas perpendiculairement au plan du boîtier (16).

4. Appareil portatif de commande de robot selon l'une des revendications 1 à 3, dans lequel le premier bras de maintien (22.1) et le deuxième bras de maintien (22.2), en particulier le premier logement (24.1) en forme de rainure et le deuxième logement (24.2) en forme de rainure, sont formés par une équerre de maintien (28) à section transversale en forme de L ou de U et par une plaque de pression (26) montée de manière réglable par rapport à l'équerre de maintien (28).

5. Appareil portatif de commande de robot selon la revendication 4, dans lequel la plaque de pression (26) est montée de manière réglable à partir d'une position de base, avec rappel par ressort, dans une position de réception dans laquelle les deux tronçons de bord (23.1, 23. 2) de l'appareil (23), lorsque l'appareil (23) est appliqué contre l'appareil portatif de commande de robot (15), sont reçus par coopération de forme et/ou par coopération de force par le premier bras de maintien (22.1) et par le deuxième bras de maintien (22.2), en particulier par le premier logement en forme de rainure (24.1) et par le deuxième logement en forme de rainure (24.2).

6. Appareil portatif de commande de robot selon la revendication 4 ou 5, dans lequel le premier bras de maintien (22.1) et le deuxième bras de maintien (22.2), en particulier le premier logement (24.1) en forme de rainure et le deuxième logement (24. 2) en forme de rainure présentent une surface de butée (30) qui est réalisée sur l'appareil portatif de commande de robot (15) pour s'appliquer contre une face avant de l'appareil (23), dans un agencement de réception de l'appareil (23), et la plaque de pression (26) est réalisée pour s'appliquer contre une face arrière de l'appareil (23), la plaque de pression (26) étant montée de manière réglable par rapport à la surface de butée (30) pour recevoir des appareils (23) d'épaisseurs différentes.

7. Appareil portatif de commande de robot selon la revendication 6, dans lequel la plaque de pression (26) est montée de manière linéairement réglable par rapport à la surface de butée (30).

8. Appareil portatif de commande de robot selon la revendication 7, dans lequel la plaque de pression (26) réglable est montée de manière linéairement réglable, conjointement avec le tronçon de préhension (16a) de type poignée.

9. Appareil portatif de commande de robot selon la revendication 7, dans lequel la plaque de pression (26) réglable est montée de manière linéairement réglable par rapport à la surface de butée (30) et par rapport au tronçon de préhension de type poignée (16a), en particulier le tronçon de préhension de type poignée (16a) est fixé rigidement par rapport à la surface de butée (30).

10. Appareil portatif de commande de robot selon la revendication 6, dans lequel la plaque de pression (26) est montée de manière pivotante par rapport à la surface de butée (30).

11. Appareil portatif de commande de robot selon l'une des revendications 1 à 10, dans lequel le premier bras de maintien (22.1) et le deuxième bras de maintien (22.2), en particulier le premier logement (24.1) en forme de rainure et le deuxième logement (24.2) en forme de rainure, présentent un profil de serrage (27) en matériau élastique, en particulier un profil à chambre creuse (27a) en matériau élastique.

12. Appareil portatif de commande de robot selon la revendication 11, dans lequel le profil de serrage (27), en particulier le profil à chambre creuse (27a), est expansible au moyen d'un fluide, en particulier de l'air comprimé, pour générer une force de serrage.

13. Appareil portatif de commande de robot selon l'une des revendications 1 à 12, dans lequel le dispositif de commande de base de sécurité (17) comporte au moins un moyen de déclenchement d'arrêt d'urgence (18), au moins un dispositif d'assentiment (19), au moins un moyen de sélection de mode de fonctionnement (20), au moins une souris 3d/6D 20 (21) et/ou au moins un moyen d'affichage, notamment au moins un écran électronique.

14. Appareil portatif de commande de robot selon l'une des revendications 1 à 13, comprenant un support, notamment un support selon l'une des revendications 1 à 13, réalisé pour fixer l'appareil portatif de commande de robot (15) sur un appareil, notamment sur un bras de robot (35), un socle de commande (36), une plateforme mobile de robot (34), et/ou un terminal mobile, notamment une tablette informatique.

15. Appareil portatif de commande de robot selon l'une quelconque des revendications 1 à 14, comprenant un moyen d'actionnement manuel (39), notamment un moyen d'actionnement (39) agencé sur le tronçon de préhension (16a) de type poignée, qui est réalisé pour maintenir le support (22) dans une position de serrage lorsque le moyen d'actionnement (39) est en position de verrouillage et pour libérer le support (22) de sa position de serrage lorsque le moyen d'actionnement (39) est en position de déverrouillage.

16. Procédé de commande d'un appareil portatif de commande de robot, selon l'une des revendications 1 à 15, comprenant un dispositif de commande de base de sécurité (17) avec un support (22) qui est réalisé sur le dispositif de commande de base de sécurité (17) pour connecter manuellement un appareil (23) communiquant électroniquement avec le dispositif de commande de base de sécurité (17), **caractérisé par** l'étape consistant à
- fixer pas serrage l'appareil (23) au support (22) de l'appareil portatif de commande de robot (15) uniquement au niveau d'une seule zone de coin de l'appareil (23).

17. Procédé selon la revendication 16, **caractérisé par** l'étape consistant à :
- libérer automatiquement et/ou manuellement l'appareil serré (23) de telle sorte qu'un bras de robot (35) ou une plate-forme de robot mobile (34) puisse être piloté(e) en actionnant des moyens d'entrée de l'appareil (23) lorsque le dispositif de commande de base de sécurité (17) est connecté à l'appareil (23) et/ou lorsqu'une communication électronique est configurée entre le dispositif de commande de base de sécurité (17) et l'appareil (23), et lorsque l'appareil (23) est correctement fixé par serrage, en particulier de manière sûre, sur l'appareil portatif de commande de robot (15).

18. Procédé selon la revendication 16, **caractérisé par** l'étape consistant à :
- commander manuellement le dispositif de commande de base de sécurité (17) pour piloter un bras de robot (35) ou une plate-forme de robot mobile (34) , lorsque le dispositif de commande de base de sécurité (17) est déconnecté de l'appareil (23) et/ou lorsqu'une communication électronique entre le dispositif de commande de base de sécurité (17) et l'appareil (23) est interrompue, en particulier lorsqu'il n'y a pas de serrage suffisant entre l'appareil portatif de commande de robot (15) et l'appareil (23).
